# EUROPEAN PATENT SPECIFICATION

(11) **EP 4 617 998 B1**
(45) Date of publication and mention of the grant of the patent: **14.10.2026**
(21) Application number: 23902359.1
(22) Date of filing: 07.11.2023
(51) Int. Cl.: G06T 7/80, G06T 5/80, G06T 3/18, G06T 5/00, G06T 7/73, G02B 27/01, G09G 5/00

(54) **DISTORTION COEFFICIENT CALIBRATION METHOD AND APPARATUS FOR EXTENDED REALITY DEVICE, AND STORAGE MEDIUM**
VERFAHREN UND VORRICHTUNG ZUR KALIBRIERUNG EINES VERZERRUNGSKOEFFIZIENTEN FÜR EINE VORRICHTUNG DER ERWEITERTEN REALITÄT UND SPEICHERMEDIUM
PROCÉDÉ ET APPAREIL D'ÉTALONNAGE DE COEFFICIENT DE DISTORSION POUR DISPOSITIF DE RÉALITÉ ÉTENDUE, ET SUPPORT D'ENREGISTREMENT

(30) Priority: 13.12.2022 CN 202211593972
(43) Date of publication of application: 17.09.2025
(73) Proprietor: Tencent Technology (Shenzhen) Company Limited, Shenzhen, Guangdong 518057 (CN)
(72) Inventor: LI, Ziqi, Shenzhen, Guangdong 518057 (CN); JI, Pan, Shenzhen, Guangdong 518057 (CN); LI, Hongdong, Shenzhen, Guangdong 518057 (CN)
(74) Representative: Gunzelmann, Rainer
(86) International application number: PCT/CN2023/130102
(87) International publication number: WO 2024/125159

(56) References cited:
- WO-A1-2021/254014
- WO-A1-2022/127841
- CN-A- 106 780 391
- CN-A- 106 780 391
- CN-A- 108 876 749
- CN-A- 112 286 353
- CN-A- 114 549 658
- CN-A- 115 439 549
- CN-A- 115 587 952
- KR-A- 20170 066 749
- US-A1- 2019 080 517
- US-B2- 10 445 860

## Description

### RELATED APPLICATION

This application claims priority to Chinese Patent Application No. 2022115939727, entitled "DISTORTION COEFFICIENT CALIBRATION METHOD AND APPARATUS FOR EXTENDED REALITY DEVICE AND STORAGE MEDIUM" and filed on December 13, 2022.

### FIELD OF THE TECHNOLOGY

This application relates to the field of computer and communication technologies, and specifically, to a method and an apparatus of determining a mapping relationship for an extended reality device and a storage medium.

### BACKGROUND OF THE DISCLOSURE

With the rise of extended reality technologies, extended reality devices have emerged. Extended devices are also referred to as XR devices, and include virtual reality devices (also referred to as VR devices), augmented reality devices (AR devices), and mixed reality devices (MR devices). These devices can implement system simulation of three-dimensional dynamic scenes and entity behaviors.

When a user uses an extended reality device, light emitted by a display in the extended reality device enters human eyes through an optical module. However, since the light is distorted after passing through the optical module in the extended reality device, an image viewed by the user through the extended reality device may be a distorted image. To enable the user to view a normal image, before the extended reality device is used, distortion correction needs to be performed based on a distortion coefficient of the extended reality device. However, there is currently no unified, standard, and automatic distortion coefficient calibration method. KR20170066749A refers to "apparatus and method for correcting image distortion of head-up display"; WO2021/254014A1 refers to "display calibration method, apparatus, device, and storage medium"; WO2022/127841A1 refers to "image remapping method and image processing device"; US10445860B2 refers to "autofocus virtual reality headset"; and CN114549658A refers to "camera calibration method and device and electronic equipment".

### SUMMARY

According to embodiments of this application, a method and an apparatus of determining a mapping relationship for an extended reality device, a computer device, a storage medium, and a computer program product are provided.

The invention is set out in appended set of claims.

Details of one or more embodiments of this application are provided in the accompanying drawings and descriptions below. Other features and advantages of this application become apparent with reference to the specification, the accompanying drawings, and the claims.

### BRIEF DESCRIPTION OF THE DRAWINGS

To describe the technical solutions in the embodiments of this application or the traditional technology more clearly, the following briefly describes the accompanying drawings required for describing the embodiments or the traditional technology. Apparently, the accompanying drawings in the following descriptions show merely embodiments of this application, and a person of ordinary skill in the art may still derive other accompanying drawings from the disclosed accompanying drawings without creative efforts.
FIG. 1 is a diagram of an application environment of a method of determining a mapping relationship for an extended reality device according to an embodiment;
FIG. 2 is a schematic flowchart of a method of determining a mapping relationship for an extended reality device according to an embodiment;
FIG. 3 is a schematic diagram of a calibration image according to an embodiment;
FIG. 4 is a schematic diagram of acquiring a distortion image according to an embodiment;
FIG. 5 is a schematic diagram of a calibration point according to an embodiment;
FIG. 6 is a schematic diagram in which a slide window moves towards any direction according to an embodiment;
FIG. 7 is a schematic diagram in which an extended reality device displays an image according to an embodiment;
FIG. 8 is a schematic diagram of an overall flow of distortion coefficient calibration according to an embodiment;
FIG. 9 is a schematic flowchart of a method of determining a mapping relationship for an extended reality device according to a specific embodiment;
FIG. 10 is a structural block diagram of an apparatus of determining a mapping relationship for an extended reality device according to an embodiment;
FIG. 11 is a structural block diagram of an apparatus of determining a mapping relationship for an extended reality device according to another embodiment;
FIG. 12 is a diagram of an internal structure of a computer device according to an embodiment; and
FIG. 13 is a diagram of an internal structure of a computer device according to an embodiment.

### DESCRIPTION OF EMBODIMENTS

"Multiple" mentioned in the specification means two or more. "And/or" describes an association relationship between associated objects, and represents that there may be three relationships. For example, A and/or B may represent three cases: only A exists, both A and B exist, and only B exists. The character "/" generally indicates an "or" relationship between the associated objects.

An instruction sequence of a computer program may include various branch instructions, such as conditional jump instructions. The branch instruction is an instruction in a computer program and allows a computer to execute different instruction sequences, thereby deviating from its default behavior of executing instructions in sequence.

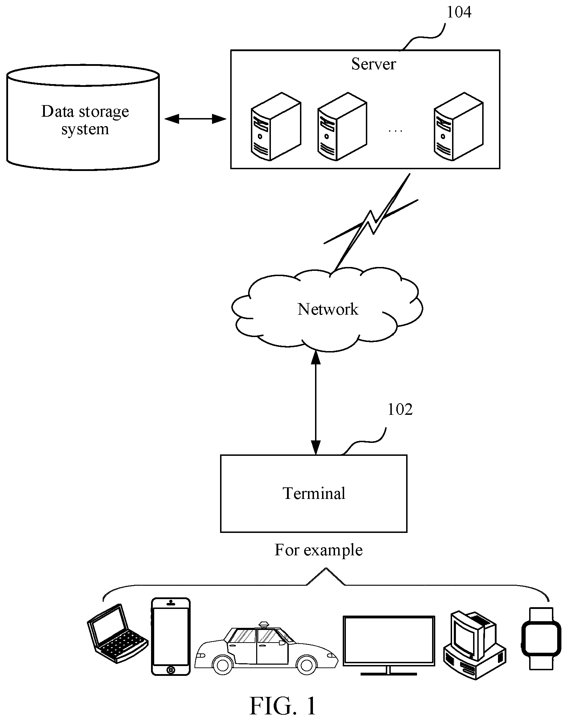

A method of determining a mapping relationship for an extended reality device provided in the embodiments of this application may be applied to an application environment shown in FIG. 1. A terminal 102 communicates with a server 104 by using a network. A data storage system may store data that needs to be processed by the server 104. The data storage system may be integrated on the server 104, or placed on the cloud or other servers. Both the terminal 102 and the server 104 may be separately configured to execute the method of determining a mapping relationship for an extended reality device provided in the embodiments of this application. The terminal 102 and the server 104 may also be configured to execute the method of determining a mapping relationship for an extended reality device provided in the embodiments of this application in coordination. An example in which the terminal 102 and the server 104 may be configured to execute the method of determining a mapping relationship for an extended reality device provided in the embodiments of this application in coordination is used. The terminal 102 may obtain a reference image and a distortion image, and send the reference image and the distortion image to the server 104, so that the server determines a target value of a distortion coefficient of the extended reality device based on the reference image and the distortion image.

The terminal 102 may be but is not limited to various desktop computers, laptops, smartphones, tablets, IoT devices, and portable wearable devices. The IoT devices may include smart speakers, smart televisions, smart air conditioners, smart in-vehicle devices, or the like. The portable wearable devices may be extended reality devices, smart watches, smart bracelets, finger rings, handles, head-mounted devices, and the like. The server 104 may be implemented by using an independent server or a server cluster that includes multiple servers.

This application relates to XR technologies. For example, this application relates to calibration of a distortion coefficient in an XR device. An XR technology, that is, an extended reality technology, refers to the integration of reality and virtuality through a computer technology and a wearable device to create a virtual environment for human-computer interaction, includes technical characteristics of VR, augmented reality (AR), and mediated reality (MR), and brings experiencers immersive feeling of seamless transition between the virtual world and the real world. The VR technology refers to the use of devices such as computers to generate a vivid virtual world with multiple sensory experiences such as three-dimensional vision, touch, and smell, so that people in the virtual world may have immersive feeling, and is mostly used in game entertainment scenes, such as VR glasses, VR displays, and VR all-in-one machines. The AR technology is a technology that superimposes virtual information onto the real world or even transcends reality. To some extent, it is an extension of the VR technology. In comparison, AR device products have characteristics of small size, light weight, and portability. The MR technology is further development of VR and AR technologies, and builds a closed loop of communication between users by presenting virtual scenes in real scenes, greatly enhancing user experience. The XR technology includes the characteristics of the above three technologies and has bright application prospects, and may be used in remote teaching scenes of scientific and experimental courses in education and training, or immersive entertainment scenes in film and television entertainment, such as immersive movie viewing and games, or exhibition event scenes such as concerts, plays, and museums, or 3D home decoration and architectural design scenes in industrial modeling and design, or new consumption scenes, such as cloud shopping and cloud fitting.

The "first", the "second", and similar terms used in this application do not indicate any order, number or significance, but are used to only distinguish different components. Unless the context clearly indicates otherwise, singular forms such as "one", "a", or "the" do not indicate a number limit, but rather indicate the existence of at least one. Numbers such as "multiple" or "multiple copies" mentioned in various embodiments of this application all refer to the number of "at least two". For example, "multiple" refers to "at least two", and "multiple copies" refers to "at least two copies".

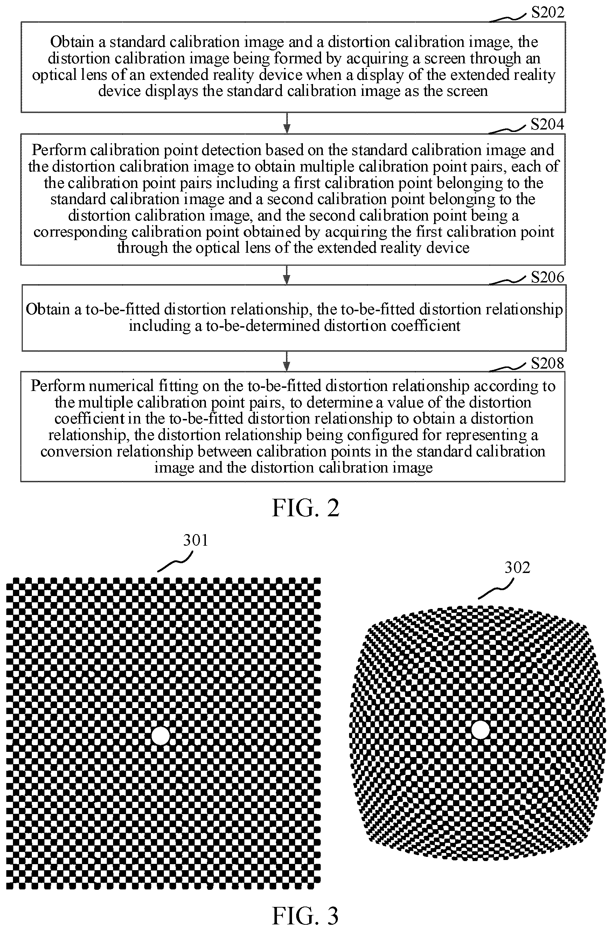

In an embodiment, as shown in FIG. 2, a method of determining a mapping relationship for an extended reality device is provided, and application of this method to a computer device is used as an example. The computer device may be the terminal or the server in FIG. 1. The method of determining a mapping relationship for an extended reality device includes the following operations:

Operation 202: Obtain a reference image and a distortion image, the distortion image being acquired by an optical module of an extended reality device when the reference image is displayed on a display of the extended reality device. In embodiments of present application, the reference image can be a reference image. In embodiments of present application, optical module can include one lens or more than one lenses. In embodiments of present application, operation 202 can include following steps: obtaining a standard calibration image and a distortion calibration image, the distortion calibration image being formed by acquiring a screen through an optical lens of an extended reality device when a display of the extended reality device displays the standard calibration image as the screen.

The reference image refers to a standard image used for calibration. For example, since corner points of a chessboard grid image are evenly distributed and include more distortion trends, the reference image is specifically a standard chessboard grid image, and the standard chessboard grid image is a chessboard grid image with evenly distributed corner points. A corner point is an extreme point. For example, a corner point when two straight lines form an angle is referred to as a corner point. The distortion image refers to an image after distortion of the reference image. Distortion refers to an abnormal change, for example, a morphological change. For example, referring to FIG. 3, figure 301 is a reference image, and figure 302 is a distortion image. FIG. 3 is a schematic diagram of a calibration image according to an embodiment.

Specifically, when a distortion coefficient of an extended reality device needs to be determined, a computer device may obtain a reference image and a distortion image. Extended reality (XR) is the collective name for various new immersive technologies such as virtual reality (VR), augmented reality (AR), and mediated reality (MR), and an extended reality device is the collective name for a virtual reality device, an augmented reality device, and a mediated reality device. Theoretically, an extended reality technology is a computer system that can create a virtual world or combine a real world with a virtual world. By creating a virtual world or combining a real world with a virtual world, users can experience highly immersive content. The distortion coefficient is a coefficient used when an optical module in an extended reality device produces distortion.

In an embodiment, the distortion image is acquired by an image acquisition device; and in a process in which the image acquisition device acquires the distortion image, the optical module of the extended reality device is located between the image acquisition device and the display of the extended reality device, and the optical center of the optical module is aligned with the center of the display.

Specifically, the distortion image is acquired by an image acquisition device. In a process of acquiring the distortion image, the reference image may be inputted to the extended reality device, and the reference image may be displayed on an extended reality display, so that the image acquisition device may acquire the reference image through the optical module of the extended reality device, to obtain the distortion image.

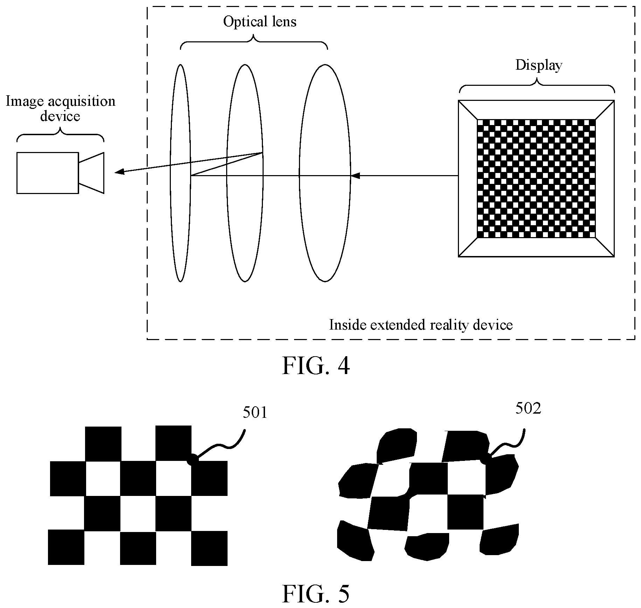

For example, referring to FIG. 4, the extended reality device may include an optical module and a display. The optical module may include multiple lenses. The optical center of the optical module may be aligned with the center of the display first, so that light emitted by the display when displaying the reference image may be transmitted to the image acquisition device through the optical module, and then the image acquisition device may image the received light to obtain the distortion image. FIG. 4 is a schematic diagram of acquiring a distortion image according to an embodiment.

In an embodiment, the optical module in the extended reality device may specifically be an XR optical module with an ultra-short focal length and a complex folded optical path. This optical module is also referred to as an optical pancake lens. This optical module is an ultra-thin XR lens that folds an optical path through an optical element. By equipping the extended reality device with an optical pancake lens, the thickness of the extended reality device may be greatly reduced.

In an embodiment, the pancake lens is also referred to as a foldable light path lens, and adopts a "foldable" light path structure, which ensures the amplification of virtual images while shortening a straight-line distance from a screen to human eyes. The pancake lens includes a semi-reflective and semi-transparent lens, a phase retarder, and a reflective polarizer. In the pancake lens, after light emitted by the display in the XR device enters the semi-reflective and semi-transparent lens, the light refracts multiple times between the lens, the phase retarder, and the reflective polarizer, and is finally emitted from the reflective polarizer. Through this solution, a volume of an optical part can be reduced, thereby reducing a volume of the entire XR device and improving wearing comfort.

In an embodiment, for a distance between the image acquisition device and the optical module, refer to a distance between human eyes and the optical module when a user uses the extended reality device. For example, the distance between the image acquisition device and the optical module may be the same as the distance between human eyes and the optical module.

In an embodiment, the center of the image acquisition device, the optical center of the optical module, and the center of the display may be aligned. For example, the center of the image acquisition device, the optical center of the optical module, and the center of the display may be located on a horizontal line.

In the above embodiment, only by displaying the reference image on the display, the image acquisition device can conveniently and quickly acquire the distortion image through the optical module, thereby improving the acquisition efficiency of the distortion image and improving the distortion coefficient calibration efficiency.

Operation 204: Detect multiple calibration point pairs based on the reference image and the distortion image, the calibration point pairs each including a first calibration point belonging to the reference image and a second calibration point belonging to the distortion image. In embodiments of present application, the second calibration point can be a calibration point corresponding to the first calibration point and acquired by the optical module of the extended reality device. In embodiments of present application, above operation 204 can include following steps: performing calibration point detection based on the standard calibration image and the distortion calibration image to obtain multiple calibration point pairs, each of the calibration point pairs comprising a first calibration point belonging to the standard calibration image and a second calibration point belonging to the distortion calibration image, and the second calibration point being a corresponding calibration point obtained by acquiring the first calibration point through the optical lens of the extended reality device.

A calibration point is a position point with a calibration characteristic in a calibration image. When the reference image and the distortion image are chessboard grid images, the calibration points are corner points in the chessboard grid.

Specifically, when the reference image and the distortion image are obtained, the computer device may perform calibration point detection on the reference image and the distortion image, to obtain multiple first calibration points in the reference image and second calibration points corresponding to the first calibration points in the distortion image, thereby obtaining multiple calibration point pairs. For example, referring to FIG. 5, when a first calibration point 501 in the reference image distorts to a second calibration point 502 in the distortion image, the first calibration point 501 corresponds to the second calibration point 502. In this case, the first calibration point 501 and the second calibration point 502 form a calibration point pair. Coordinates of the first calibration point in the reference image are referred to as first calibration point coordinates. Coordinates of the second calibration point in the distortion image are referred to as second calibration point coordinates. FIG. 5 is a schematic diagram of a calibration point according to an embodiment.

In an embodiment, when the calibration point is a corner point, the computer device may perform calibration point detection on the reference image and the distortion image according to an opencv (a cross-platform computer vision and machine learning software library) corner point detection method, to obtain multiple calibration point pairs.

In an embodiment, for each pixel block in the reference image, the computer device determines whether the pixel block includes a calibration point characteristic. If the pixel block includes a calibration point characteristic, the pixel block is determined as the first calibration point. The computer device may determine whether the pixel block includes a calibration point characteristic through a pre-trained machine learning model. Correspondingly, the computer device may also determine the second calibration point through the above method. The pixel block may include one or more pixels.

In an embodiment, a coordinate system may be established with the center of the reference image as the origin, thereby determining coordinates of the first calibration point in the reference image in the coordinate system, to obtain the first calibration point coordinates. Correspondingly, a coordinate system may be established with the center of the distortion image as the origin, thereby determining coordinates of the second calibration point in the distortion image in the coordinate system, to obtain the second calibration point coordinates.

In an embodiment, before performing calibration point detection on the reference image and the distortion image, sizes of the reference image and the distortion image may be adjusted so that the sizes of the reference image and the distortion image are unified.

Operation 206, 208: Perform numerical fitting on an initial calibration point mapping relationship between the reference image and the distortion image according to the multiple calibration point pairs to obtain a target calibration point mapping relationship between the reference image and the distortion image. In embodiments of present application, the numerical fitting is performed on an initial calibration point mapping relationship to determine a value of at least one coefficient of the initial calibration point mapping relationship (in embodiments of present application, above least one coefficient is configured to indicate or characterize the initial calibration point mapping relationship), thereby obtaining above target calibration point mapping relationship between the reference image and the distortion image.

In embodiments of present application, above operation 206 can include following steps: obtaining a to-be-fitted distortion relationship, the to-be-fitted distortion relationship comprising a to-be-determined distortion coefficient. In embodiments of the present application, above operation 208 can include following steps: performing numerical fitting on the to-be-fitted distortion relationship according to the multiple calibration point pairs, to determine a value of the distortion coefficient in the to-be-fitted distortion relationship to obtain a distortion relationship, the distortion relationship being configured for representing a conversion relationship between calibration points in the standard calibration image and the distortion calibration image.

Specifically, the computer device obtains a preset initial calibration point mapping relationship, the initial calibration point mapping relationship is configured for obtaining a target calibration point mapping relationship through fitting, and the target calibration point mapping relationship is configured for representing a conversion relationship between calibration points in the reference image and the distortion image. The distortion coefficient in the initial calibration point mapping relationship is to be determined.

In an embodiment, taking the classic Brown model as an example, the initial calibration point mapping relationship is determined by the following formula: $\left\{\begin{matrix}{r}_{d} = f \left({r}_{u}\right) = {r}_{u} + {c}_{1} {r}_{u}^{3} + {c}_{2} {r}_{u}^{5} \\ {{r}_{u}}^{2} = {{x}_{u}}^{2} + {{y}_{u}}^{2} \\ {{r}_{d}}^{2} = {{x}_{d}}^{2} + {{y}_{d}}^{2}\end{matrix}\right.$

*rᵤ* indicates an undistorted distance; and *r_{d}* indicates a distorted distance. The undistorted distance is a distance between the first calibration point coordinates and the center point of the reference image. The distorted distance is a distance between the second calibration point coordinates and the center point of the distortion image. (*xᵤ, yᵤ*) indicates the first calibration point coordinates. The first calibration point coordinates are coordinates determined by establishing a coordinate system with the center point of the reference image as the origin. (*x_{d}, y_{d}*) indicates the second calibration point coordinates. The second calibration point coordinates are coordinates determined by establishing a coordinate system with the center point of the distortion image as the origin. *c*₁ and *c*₂ are to-be-determined distortion coefficients. The first calibration point coordinates are coordinates of the first calibration point in the reference image. The second calibration point coordinates are coordinates of the second calibration point in the distortion image.

Operation 208: Perform numerical fitting on the initial calibration point mapping relationship according to the multiple calibration point pairs, to determine a value of the distortion coefficient in the initial calibration point mapping relationship to obtain a target calibration point mapping relationship, the target calibration point mapping relationship being configured for representing a conversion relationship between calibration points in the reference image and the distortion image.

Numerical fitting is also referred to as curve fitting, commonly known as curve forming, and refers to a process of obtaining a continuous function (that is, a curve) based on several pieces of discrete data. The obtained continuous function is consistent with the inputted several pieces of discrete data. Based on the conversion relationship between the calibration points in the reference image and the distortion image, the calibration points in the reference image is converted into calibration points in the distortion image. For example, the target calibration point mapping relationship is specifically a function. After coordinates of a calibration point A in the distortion image are inputted to the function, the function may output coordinates of a calibration point B in the reference image corresponding to the calibration point A.

Specifically, when multiple calibration point pairs are obtained, the computer device may determine coordinate pairs respectively corresponding to the calibration point pairs. The coordinate pair includes coordinates of the first calibration point and coordinates of the second calibration point, and the first calibration point and the second calibration point belong to the same calibration point pair. For example, when the calibration point pair A includes a first calibration point a and a second calibration point b, a coordinate pair A corresponding to the calibration point pair A may include coordinates of the first calibration point a and coordinates of the second calibration point b. According to the coordinate pairs corresponding to the multiple calibration point pairs, the value of the to-be-determined distortion coefficient in the initial calibration point mapping relationship is determined. For example, values of *c*₁ and *c*₂ in the above formula may be determined. The target value of the distortion coefficient is a distortion coefficient value used when the optical module of the extended reality device produces distortion. At this point, the distortion coefficient used when the extended reality device produces distortion has been calibrated. By calibrating the distortion coefficient, subsequent distortion correction, depth estimation, spatial positioning, and the like may be performed based on the calibrated distortion coefficient.

In an embodiment, the computer device may perform numerical fitting on the initial calibration point mapping relationship through a least squares method, a gradient descent learning method, a trust region algorithm, a Gauss-Newton iteration method, or the like based on multiple calibration point pairs, to obtain the value of the distortion coefficient in the initial calibration point mapping relationship.

In the above method of determining a mapping relationship for an extended reality device, by obtaining the reference image and the distortion image after distortion of the reference image, calibration point detection may be performed on the reference image and the distortion image, thereby obtaining a calibration point pair including the first calibration point before distortion and the second calibration point after distortion. In this way, based on multiple calibration point pairs, numerical fitting may be performed on the initial calibration point mapping relationship to obtain the value of the distortion coefficient of the initial calibration point mapping relationship, that is, obtain the target calibration point mapping relationship that represents the conversion relationship between the calibration points in the reference image and the distortion image, thereby achieving the purpose of automatic calibration of the distortion coefficient. Since this application only requires one reference image to achieve distortion coefficient calibration of the extended reality device, the process of distortion coefficient calibration is greatly simplified and the distortion coefficient calibration efficiency is improved.

In an embodiment, the performing calibration point detection based on the reference image and the distortion image to obtain multiple calibration point pairs includes: performing calibration point detection on the reference image to obtain multiple first calibration points, and determining coordinates of each of the first calibration points in the reference image, to obtain first calibration point coordinates respectively corresponding to the multiple first calibration points; performing calibration point detection on the distortion image to obtain multiple second calibration points, and determining coordinates of each of the second calibration points in the distortion image, to obtain second calibration point coordinates respectively corresponding to the multiple second calibration points; determining a positional relationship between the first calibration points according to the first calibration point coordinates respectively corresponding to the multiple first calibration points; determining a positional relationship between the second calibration points according to the second calibration point coordinates respectively corresponding to the multiple second calibration points; and performing matching between the multiple first calibration points and the multiple second calibration points according to the positional relationship between the first calibration points and the positional relationship between the second calibration points, to obtain the multiple calibration point pairs.

Specifically, the computer device performs calibration point detection on the reference image to identify each first calibration point in the reference image, and outputs first calibration point coordinates corresponding to each first calibration point. The first calibration point refers to a pixel or a pixel block in the reference image, and correspondingly, the first calibration point coordinates refer to position coordinates of the pixel or the pixel block in the reference image. For example, referring to FIG. 5, when the reference image is a chessboard grid image, the white in the reference image may be used as the background color. Then, the computer device identifies a corner point of each black grid and uses the identified corner point as the first calibration point. Correspondingly, the computer device may also perform calibration point detection on the distortion image, use the white in the distortion image as the background color, identify a corner point of a black grid in the distortion image, obtain multiple second calibration points, and output second calibration point coordinates respectively corresponding to the second calibration points.

Further, the computer device determines the positional relationship between the first calibration points according to abscissa and ordinate values of the first calibration point coordinates. Since there is a one-to-one correspondence between the first calibration point and the first calibration point coordinates, the positional relationship between the first calibration points is also the positional relationship between the first calibration point coordinates. For example, when first calibration point coordinates of a first calibration point A are (1, 1), first calibration point coordinates of a first calibration point B are (1, 0), and first calibration point coordinates of a first calibration point C are (0, 1), it may be considered that the first calibration point A is located on the right of the first calibration point C and above the first calibration point B. Further, the computer device sorts the first calibration points according to the positional relationship between the first calibration points to obtain a first calibration point matrix. For example, in the first calibration point matrix, the mark A of the first calibration point A is located on the right of the mark C of the first calibration point C and above the mark B of the first calibration point B. Correspondingly, the computer device may determine the positional relationship between the second calibration points in the above manner. Since there is a one-to-one correspondence between the second calibration point and the second calibration point coordinates, the positional relationship between the second calibration points is the positional relationship between the second calibration point coordinates, and the second calibration points are sorted according to the positional relationship between the second calibration points to obtain a second calibration point matrix.

Further, the computer device uses the first calibration point and the second calibration point located at the same position in the first calibration point matrix and the second calibration point matrix as a calibration point pair, and uses first calibration point coordinates of the first calibration point and second calibration point coordinates of the second calibration point in a calibration point pair as a coordinate pair. For example, when it is determined that the first calibration point A is located at the intersection of the first row and the first column in the first calibration point matrix, and the second calibration point D is located at the intersection of the first row and the first column in the second calibration point matrix, it may be determined that first calibration point coordinates corresponding to the first calibration point A and second calibration point coordinates corresponding to the second calibration point D are a coordinate pair of the calibration points.

In this embodiment, by performing calibration point detection, a calibration point pair that reflects the change before and after calibration point distortion may be obtained, so that the distortion coefficient of the extended reality device may be subsequently obtained based on the calibration point pair. In addition, since the positional relationship between the points in the image does not change after the image is distorted, by determining the positional relationship between the first coordinate points and determining the positional relationship between the second coordinate points, calibration points that correspond to each other before and after distortion may be accurately obtained based on the determined positional relationship.

In an embodiment, the performing calibration point detection on the reference image to obtain multiple first calibration points includes: obtaining a slide window and triggering the slide window to slide on the reference image according to a preset moving step size, to obtain a standard partial image selected by the slide window; determining a first overall grayscale value of the standard partial image; triggering the slide window to move towards any direction multiple times to obtain multiple standard partial images after movement corresponding to the current standard partial image; determining a second overall grayscale value of each of the standard partial images after movement; and extracting the first calibration point from the standard partial image according to that a difference between each second overall grayscale value and the first overall grayscale value is greater than or equal to a preset difference threshold.

Specifically, when the first calibration point needs to be identified, the computer device may generate a slide window and trigger the slide window to slide on the reference image according to a preset moving step size. For example, the computer device may trigger the slide window to slide on the slide window from top to bottom from left to right. The image selected by the slide window is referred to as a standard partial image. For each standard partial image selected by the slide window, the computer device may determine whether the standard partial image selected by the slide window includes a calibration point characteristic, and if yes, determine that there is a calibration point in the slide window and use the calibration point as the first calibration point.

In an embodiment, when the calibration point is a corner point, the corner point is a corner point of an edge, and the characteristic of the edge is that a gradient suddenly changes in a direction. Therefore, the corner point indicates that an area has gradient information of edge changes in two or multiple directions. If a slide window is used to observe a corner point area, as the slide window slides in multiple directions, a strong change (a gradient) of pixel density may be perceived, that is, the overall grayscale value change may be perceived.

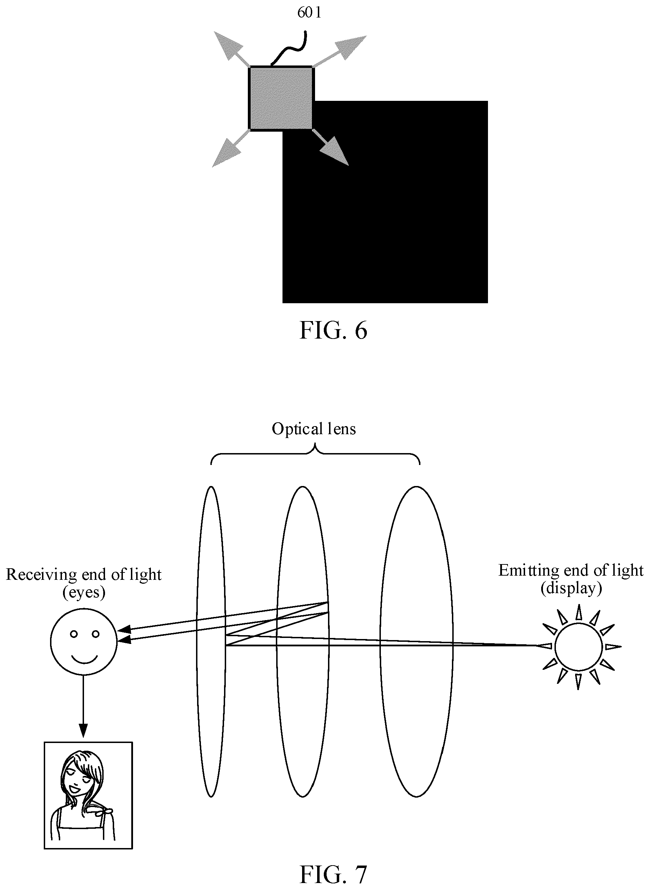

Based on the above principle, the standard partial image currently selected by the slide window is referred to as the current standard partial image. When the current standard partial image is selected by the slide window, referring to FIG. 6, the computer device may trigger the slide window 601 to move multiple times in any direction, to obtain multiple moved slide windows, and contents selected by the moved slide windows are referred to as standard partial images after movement. The computer device determines an overall grayscale value of the current standard partial image, where the overall grayscale value of the current standard partial image is referred to as a first overall grayscale value, determines an overall grayscale value of each standard partial image after sliding, where the overall grayscale value is referred to as a second overall grayscale value, determines a difference between the second overall grayscale value of each standard partial image after sliding and the first overall grayscale value of the current standard partial image, and when each difference is greater than or equal to a preset difference threshold, may determine that the current standard partial image includes a corner point characteristic. In this case, a point pointed by the corner point characteristic may be used as the first calibration point. For example, if the center point of the current standard partial image is a corner point, the center point of the current standard partial image may be used as the first calibration point. FIG. 6 is a schematic diagram in which a slide window moves towards any direction according to an embodiment.

In an embodiment, the computer device may determine grayscale values of pixels in the current standard partial image, and use an average of the grayscale values of the pixels in the current standard partial image as the first overall grayscale value. Correspondingly, the computer device may determine grayscale values of pixels in the standard partial image after movement, and use an average of the grayscale values of the pixels in the standard partial image after movement as the second overall grayscale value.

In the above embodiment, the slide window is triggered to slide in the reference image according to the moving step size, so that the reference image may be divided into multiple standard partial images. Therefore, the first calibration point in the reference image is accurately identified based on the multiple standard partial images obtained by the division. When the current standard partial image is selected, by triggering the slide window to slide in any direction, the current standard partial image after sliding may be obtained. In this way, based on the overall grayscale value of the current standard partial image before sliding and the overall grayscale value of the current standard partial image after sliding, it can be quickly and accurately determined whether the current standard partial image includes a corner point characteristic, and then the corresponding first calibration point is determined based on the corner point characteristic.

In an embodiment, the extracting the first calibration point from the standard partial image according to a difference between each second overall grayscale value and the first overall grayscale value includes: performing subtraction on each second overall grayscale value and the first overall grayscale value to obtain a grayscale difference corresponding to each second overall grayscale value; obtaining absolute values of grayscale differences, and selecting absolute values greater than or equal to a preset difference threshold from the absolute values of the grayscale differences; determining a number of the selected absolute values, and when the number is greater than or equal to a preset number threshold, using the center of the standard partial image as the first calibration point.

Specifically, when obtaining the second overall grayscale value of each standard partial image after movement, the computer device may perform subtraction on each second overall grayscale value and the first overall grayscale value, to obtain a grayscale value difference corresponding to each second overall grayscale value. For example, the computer device subtracts the first overall grayscale value from a second overall grayscale value A to obtain a grayscale difference corresponding to the second overall grayscale value A, and subtracts the first overall grayscale value from a second overall grayscale value B to obtain a grayscale difference corresponding to the second overall grayscale value B. Further, the computer device obtains the absolute values of the grayscale differences to obtain multiple absolute values, determines target absolute values greater than or equal to the preset difference threshold, and counts a number of the selected target absolute values. When the number of the selected target absolute values is greater than or equal to a preset number threshold, the center of the current standard partial image is used as the first calibration point. For example, when a difference between each second overall grayscale value and the first overall grayscale value is greater than or equal to a preset difference threshold, the center of the current standard partial image is used as the first calibration point.

In the above embodiment, the second overall grayscale value is the overall grayscale value of the standard partial image after movement, and the standard partial image after movement is obtained by moving the standard partial image. Therefore, when the difference between each second overall grayscale value and the first overall grayscale value is greater than or equal to the preset difference threshold, it may be considered that there is such a target area in the standard partial image that overall grayscale values of other areas around the target area is smaller than the overall grayscale value of the target area. It is known that the grayscale value of the corner point area is greater than a grayscale value of an area around the corner point. Therefore, when it is determined that there is such a target area in the standard partial image that overall grayscale values of other areas around the target area is smaller than the overall grayscale value of the target area, it may be considered that the target area is an area in which a corner point is located. Therefore, the target area may be used as the first calibration point. In this way, the determination of the first calibration point is achieved.

In an embodiment, the performing calibration point detection on the distortion image to obtain multiple second calibration points includes: obtaining a slide window and triggering the slide window to slide on the distortion image according to a preset moving step size, to obtain a distortion partial image selected by the slide window; determining a third overall grayscale value of the distortion partial image; triggering the slide window to move towards any direction multiple times to obtain multiple distortion partial images after movement corresponding to the distortion partial image; determining a fourth overall grayscale value of each of the distortion partial image after movement; and extracting the second calibration point from the distortion partial image according to a difference between each fourth overall grayscale value and the third overall grayscale value.

Specifically, when the second calibration point needs to be identified, the computer device may generate a slide window and trigger the slide window to slide on the distortion image according to a preset moving step size. For example, the computer device may trigger the slide window to slide on the slide window from top to bottom from left to right. For each distortion partial image selected by the slide window, the computer device may determine whether the distortion partial image includes a calibration point characteristic, and if yes, determine that there is a calibration point in the slide window and use the calibration point as the second calibration point. For determining of whether the distortion partial image selected by the slide window includes a calibration point characteristic, refer to the above embodiment. In this embodiment, details are not described herein again. In an embodiment, a size of the slide window generated for the distortion image may be consistent with a size of the slide window generated for the reference image. A moving step size of the slide window for the distortion image may be consistent with a moving step size of the slide window for the reference image.

In an embodiment, the computer device may also identify only some calibration points in the reference image and the distortion image, without identifying all calibration points. For example, only calibration points near center areas in the reference image and the distortion image may be identified.

In the above embodiment, the slide window is triggered to slide in the distortion image according to the moving step size, so that the distortion image may be divided into multiple distortion partial images. Therefore, the second calibration point in the distortion image is accurately identified based on the multiple distortion partial images obtained by the division.

In an embodiment, the performing numerical fitting on the initial calibration point mapping relationship according to the multiple calibration point pairs, to determine a target value of the distortion coefficient in the initial calibration point mapping relationship includes: obtaining a preset distortion coefficient value increment model; where the distortion coefficient value increment model is generated based on the distortion coefficient in the initial distortion relationship; determining a predicted value of the distortion coefficient of a current round; obtaining a predicted value increment of the distortion coefficient of the current round through the distortion coefficient value increment model according to the multiple calibration point pairs and the predicted value of the distortion coefficient of the current round; when the predicted value increment of the distortion coefficient does not meet the numerical convergence condition, adding the predicted value increment of the distortion coefficient of the current round and the predicted value of the distortion coefficient of the current round, to obtain an updated predicted value of the distortion coefficient; using a next round as the current round, using the updated predicted value as a predicted value of the distortion coefficient of the current round, and returning to continue to perform the operation of obtaining a predicted value increment of the distortion coefficient of the current round through the distortion coefficient value increment model according to the multiple calibration point pairs and the predicted value of the distortion coefficient of the current round, until the predicted value increment of the distortion coefficient meets the numerical convergence condition; and using a predicted value of the distortion coefficient of the last round as the value of the distortion coefficient in the initial calibration point mapping relationship.

Specifically, the computer device may obtain a preset distortion coefficient value increment model, where the distortion coefficient value increment model is configured for determining a change amount of the predicted value of the distortion coefficient in two consecutive iterations. The distortion coefficient increment model may specifically be a function, or may be a change amount function model for predicting the predicted value of the distortion coefficient in two consecutive iterations. The computer device determines the predicted value of the distortion coefficient of the current round, inputs the predicted value of the distortion coefficient of the current round and multiple calibration point pairs into the distortion coefficient value increment model, and outputs the predicted value increment of the distortion coefficient of the current round through the distortion coefficient value increment model. The computer device determines whether the predicted value increment of the distortion coefficient of the current round meets a preset numerical convergence condition. If the preset numerical convergence condition is not met, the computer device adds the predicted value increment of the distortion coefficient and the predicted value of the distortion coefficient of the current round, to obtain an updated predicted value of the distortion coefficient. Then, a next round of iteration is entered, the obtained updated predicted value of the distortion coefficient is used as the predicted value of the distortion coefficient of the current round, and the distortion coefficient value incremental model continues to be triggered to output the predicted value increment of the distortion coefficient of the current round based on multiple calibration point pairs and the predicted value of the distortion coefficient of the current round, until the outputted predicted value increment of the distortion coefficient of the current round meets the numerical convergence condition.

When the predicted value of the distortion coefficient of the current round meets the numerical convergence condition, the computer device uses the predicted value of the distortion coefficient of the current round as the value of the distortion coefficient in the target calibration point mapping relationship. The value of the distortion coefficient is a value of the distortion coefficient used when the extended reality device produces distortion.

In an embodiment, the computer device may obtain a preset convergence value. For example, the convergence value may be 1*e*^{*-*8}, and the predicted value increment of the distortion coefficient of the current round is compared with the convergence value. If the predicted value increment of the distortion coefficient of the current round is less than or equal to the convergence value, it is determined that the predicted value increment of the distortion coefficient of the current round meets the numerical convergence condition; otherwise, it is determined that the numerical convergence condition is not met.

In an embodiment, the preset value may be used as the predicted value of the distortion coefficient of the first round.

In an embodiment, the distortion coefficient value increment model is determined based on a residual model; the residual model is determined based on the initial calibration point mapping relationship; the residual model represents residual between a first coordinate change and a second coordinate change; the first coordinate change is a change between a coordinate before distortion and a coordinate after distortion determined based on the predicted value of the distortion coefficient; and the second coordinate change is a change between a coordinate before distortion and a coordinate after distortion determined based on an actual value of the distortion coefficient.

Specifically, the corresponding residual model may be determined first based on the initial calibration point mapping relationship. The residual model is configured for representing residual between the change between the coordinate before distortion and the coordinate after distortion determined based on the predicted value of the distortion coefficient and the change between the coordinate before distortion and the coordinate after distortion determined based on the actual value of the distortion coefficient. Then, the difference between the predicted value and the actual value of the distortion coefficient in the target calibration point mapping relationship is determined based on the residual between the change between the coordinate before distortion and the coordinate after distortion determined based on the predicted value of the distortion coefficient and the change between the coordinate before distortion and the coordinate after distortion determined based on the actual value of the distortion coefficient. The predicted value of the distortion coefficient is a fitted value obtained through numerical fitting. The actual value of the distortion coefficient is a target of numerical fitting.

Further, to achieve a minimum value of least squares optimization for the residual model, Taylor expansion may be performed on the residual model to obtain the distortion coefficient value increment model. In an embodiment, to achieve a minimum value of least squares optimization for the residual model, a partial derivative of the residual model in the direction of the distortion coefficient may be determined first to obtain the Jacobian matrix model. Then, through Taylor expansion, a Gauss-Newton condition, and a first-order derivative being zero, the distortion coefficient value increment model is obtained.

In an embodiment, the distortion coefficient value increment model may be determined by 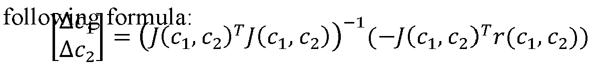 $J \left({c}_{1}, {c}_{2}\right) = \left[\begin{matrix}\frac{\partial F \left({c}_{1}, {c}_{2}\right)}{\partial {c}_{1}} & \frac{\partial F \left({c}_{1}, {c}_{2}\right)}{\partial {c}_{2}} \\ \frac{\partial G \left({c}_{1}, {c}_{2}\right)}{\partial {c}_{1}} & \frac{\partial G \left({c}_{1}, {c}_{2}\right)}{\partial {c}_{2}}\end{matrix}\right]$ $F \left({c}_{1}, {c}_{2}\right) = {\sum }_{i = 1}^{N} \left[{x}_{di}\left(1+{c}_{1}{r}_{di}^{3}+{c}_{2}{r}_{di}^{5}\right)-{x}_{ui}\right]$ $G \left({c}_{1}, {c}_{2}\right) = {\sum }_{i = 1}^{N} \left[{y}_{di}\left(1+{c}_{1}{r}_{di}^{3}+{c}_{2}{r}_{di}^{5}\right)-{y}_{ui}\right]$
where $\left[\begin{matrix}Δ {c}_{1} \\ Δ {c}_{2}\end{matrix}\right]$ is a value increment model; Δ*c*₁ and Δ*c*₂ are both predicted value increments of the distortion coefficient; *F*(*c*₁*, c*₂) and *G*(*c*₁*, c*₂) are both residual models; (*xᵤᵢ, yᵤᵢ*) is first calibration point coordinates in an i^{th} coordinate pair; (*x_{di}, y_{dí}*) is second calibration point coordinates in the i^{th} coordinate pair; *rᵤᵢ* is an undistorted distance determined based on (*xᵤᵢ, yᵤᵢ*); *r_{di}* is a distorted distance determined based on (*x_{di}, y_{dí}*); and *c*₁ and *c*₂ are to-be-determined distortion coefficients. The model in this application may be a calculation formula, and the matrix may be a specific value outputted based on the calculation formula. For example, the residual matrix may be a matrix calculation formula related to the variables *c*₁ and *c*₂. A calculation result of this calculation formula may be referred to as the residual matrix. The i^{th} coordinate pair corresponds to an i^{th} calibration point pair.

In the above embodiment, when the predicted value increment of the distortion coefficient converges to close to zero, it means that even if the iteration continues, the fitted predicted value of the distortion coefficient is almost unchanged. At the same time, the coordinate residual of each iteration in this system is generated by the distortion coefficient of the iteration. Therefore, in this system, the residual model is used as a relational expression (F and G) to optimize a partial derivative in the direction of the distortion coefficient (c1 and c2). When the iterative residual of the distortion coefficient converges to a small range, it means that the residual model has reached an optimized target minimum value, that is, means that the distortion coefficient value corresponding to the target calibration point mapping relationship has been obtained through fitting.

In an embodiment, the obtaining a predicted value increment of the distortion coefficient of the current round through the distortion coefficient value increment model according to the multiple calibration point pairs and the predicted value of the distortion coefficient of the current round includes: obtaining a Hessian matrix of the current round through a Hessian matrix model in the distortion coefficient value increment model according to the multiple calibration point pairs; obtaining an iteration matrix of the current round through an iteration matrix model in the distortion coefficient value increment model according to the multiple calibration point pairs and the predicted value of the distortion coefficient of the current round; and fusing the Hessian matrix of the current round and the iteration matrix of the current round to obtain the predicted value increment of the distortion coefficient of the current round.

Specifically, the distortion coefficient value increment model includes a Hessian matrix model and an iteration matrix model. The Hessian matrix model is a model for outputting a Hessian matrix. For example, the Hessian matrix model may be a function model. The iteration matrix model is a model for outputting an iteration matrix. For example, the iteration matrix model may be a function model. In the current round, the computer device may obtain the Hessian matrix of the current round based on the multiple calibration point pairs and the Hessian matrix, and output the iteration matrix of the current round based on the multiple calibration point pairs, the predicted value of the distortion coefficient of the current round, and the iteration matrix model. The computer device fuses the iteration matrix of the current round and the Hessian matrix, for example, multiplies the negative first power of the Hessian matrix with the iteration matrix to obtain the predicted value increment of the distortion coefficient of the current round.

In an embodiment, the Hessian matrix describes a local curvature of a function. When the distortion coefficient value increment model is $\left[\begin{matrix}Δ {c}_{1} \\ Δ {c}_{2}\end{matrix}\right] = {\left(J{\left({c}_{1}, {c}_{2}\right)}^{T}J\left({c}_{1}, {c}_{2}\right)\right)}^{- 1} \left(-J{\left({c}_{1}, {c}_{2}\right)}^{T}r\left({c}_{1}, {c}_{2}\right)\right)$ in the above embodiment, (*J*(*c*₁*, c₂*)*^{T}J*(*c*₁*, c*₂)) is the Hessian matrix model, and (*-J*(*c*₁*, c*₂)*^{T}r*(*c*₁, *c*₂)) is the iteration matrix model. Therefore, coordinate pairs corresponding to the multiple calibration point pairs may be inputted into (*J*(*c*₁*, c*₂*)^{T}J*(*c*₁*, c*₂)) to obtain a specific Hessian matrix, the coordinate pairs corresponding to the multiple calibration point pairs and the predicted value of the distortion coefficient of the current round may be inputted into the formula (*-J*(*c*₁*, c*₂)*^{T}r*(*c*₁*, c*₂)) to obtain a specific iteration matrix, and the negative first power of the Hessian matrix is multiplied with the iteration matrix to obtain the predicted value increment of the distortion coefficient in the current round.

In the above embodiment, by determining the Hessian matrix and the iteration matrix, a change amount between predicted values of the distortion coefficient in two consecutive iterations may be predicted based on the Hessian matrix and the iteration matrix, so that the value of the distortion coefficient may be subsequently determined based on the change amount between the predicted values of the distortion coefficient in two consecutive iterations.

In an embodiment, the obtaining a Hessian matrix of the current round through a Hessian matrix model in the distortion coefficient value increment model according to the multiple calibration point pairs includes: for each of the multiple calibration point pairs, obtaining, through a Jacobian matrix model in a Hessian matrix model based on a coordinate pair corresponding to the target calibration point pair, a current Jacobian matrix corresponding to the current calibration point pair; fusing the current Jacobian matrix and the transpose of the current Jacobian matrix to obtain a fused Jacobian matrix corresponding to the target calibration point pair; and superimposing fused Jacobian matrices respectively corresponding to the multiple calibration point pairs, to obtain the Hessian matrix of the current round.

Specifically, the Hessian matrix model may include the Jacobian matrix model. When the Hessian matrix of the current round needs to be determined, the computer device may input the coordinate pair corresponding to each calibration point pair into the Jacobian matrix model in the Hessian matrix model, to obtain a Jacobian matrix corresponding to each calibration point pair. Further, for each of the multiple calibration point pairs, the computer device determines the transpose of the Jacobian matrix corresponding to the target calibration point pair to obtain the transpose of the Jacobian matrix, and fuses the Jacobian matrix and the transpose of the Jacobian matrix corresponding to the same calibration point pair, to obtain the fused Jacobian matrix corresponding to each calibration point pair. For example, the Jacobian matrix corresponding to the calibration point pair A is multiplied with the transpose of the Jacobian matrix to obtain the fused Jacobian matrix corresponding to the calibration point pair A. When fused Jacobian matrices corresponding to the calibration point pairs are obtained, the computer device may superimpose the fused Jacobian matrices to obtain the Hessian matrix of the current round.

In an embodiment, the computer device may set an initial value of the Hessian matrix and traverse calibration point pairs. For the first traversed calibration point pair, the computer device may determine a Jacobian matrix of the first traversed calibration point pair, and multiply the Jacobian matrix with the transpose of the Jacobian matrix to obtain a fused Jacobian matrix of the first traversed calibration point pair. The computer device superimposes the initial value of the Hessian matrix and the fused Jacobian matrix to obtain a superimposed Hessian matrix of the first traversed calibration point pair. The computer device continues to determine a fused Jacobian matrix of a next traversed calibration point pair, and superimposes the fused Jacobian matrix of the next traversed calibration point pair and the superimposed Hessian matrix of the first traversed calibration point pair, to obtain a superimposed Hessian matrix of the next traversed calibration point pair. Iteration is performed in this way until the last calibration point pair is traversed, and a superimposed Hessian matrix of the last traversed calibration point pair is used as the Hessian matrix of the current round.

In an embodiment, in the process of calculating the Jacobian matrix corresponding to the i^{th} calibration point pair, assuming that the coordinate pair corresponding to the i^{th} calibration point pair is [(*x_{uí}, yᵤᵢ*)*,* (*x_{di}, y_{di}*)], the computer determines an undistorted distance *rᵤᵢ* corresponding to the first calibration point coordinates (*xᵤᵢ, yᵤᵢ*)*,* determines a distorted distance *r_{di}* corresponding to the second calibration point coordinates (*x_{di}, y_{di}*)*,* and inputs (*x_{uí}, yᵤᵢ*)*, r_{uí},* (*x_{di}, y_{di}*)*,* and *r_{di}* to the Jacobian matrix model $J \left({c}_{1}, {c}_{2}\right) = \left[\begin{matrix}\frac{\partial F \left({c}_{1}, {c}_{2}\right)}{\partial {c}_{1}} & \frac{\partial F \left({c}_{1}, {c}_{2}\right)}{\partial {c}_{2}} \\ \frac{\partial G \left({c}_{1}, {c}_{2}\right)}{\partial {c}_{1}} & \frac{\partial G \left({c}_{1}, {c}_{2}\right)}{\partial {c}_{2}}\end{matrix}\right]$, to obtain the Jacobian matrix $\left[\begin{matrix}{x}_{di} ∗ {{r}_{di}}^{3} & {x}_{di} ∗ {{r}_{di}}^{5} \\ {y}_{di} ∗ {{r}_{di}}^{3} & {y}_{di} ∗ {{r}_{di}}^{5}\end{matrix}\right]$ of the i^{th} coordinate pair [(*xᵤᵢ*, *yᵤᵢ*)*,* (*x_{di}, y_{di}*)]. The Jacobian matrix corresponding to the i^{th} coordinate pair is also the Jacobian matrix corresponding to the i^{th} calibration point pair.

In the above embodiment, by determining the fused Jacobian matrices of all the calibration point pairs, the Hessian matrix of the current round can be quickly obtained based on the fused Jacobian matrices of all the calibration point pairs.

In an embodiment, the obtaining an iteration matrix of the current round through an iteration matrix model in the distortion coefficient value increment model according to the multiple calibration point pairs and the predicted value of the distortion coefficient of the current round includes: for each of the multiple calibration point pairs, determining the Jacobian matrix corresponding to the target calibration point pair; and according to the target calibration point pair and the predicted value of the distortion coefficient of the current round, obtaining, through a residual model in the iteration matrix model, a current residual matrix corresponding to the target calibration point pair; fusing the transpose of the Jacobian matrix corresponding to the target calibration point pair and the residual matrix corresponding to the target calibration point pair, to obtain a fused iteration matrix corresponding to the target calibration point pair; and superimposing fused iteration matrices respectively corresponding to the multiple calibration point pairs, to obtain the iteration matrix of the current round.

Specifically, the iteration matrix model may include a Jacobian matrix model and a residual model. When the iteration matrix of the current round needs to be determined, the computer device may input each coordinate pair of calibration points and the predicted value of the distortion coefficient of the current round into the Jacobian matrix model in the iteration matrix model, to obtain a Jacobian matrix corresponding to each coordinate pair of the calibration points. The computer device may also reuse the current Jacobian matrix corresponding to the current calibration point pair and generated when calculating the Hessian matrix.

Further, for each of the multiple calibration point pairs, the target calibration point pair is referred to as the current calibration point pair, and the computer device inputs a coordinate pair corresponding to the current calibration point pair and the predicted value of the distortion coefficient of the current round into the residual model in the iteration matrix model, to obtain the residual matrix corresponding to the current calibration point pair outputted by the residual model. The computer device determines the transpose of the Jacobian matrix corresponding to the current calibration point pair, and multiplies the transpose of the Jacobian matrix corresponding to the current calibration point pair with the residual matrix corresponding to the current calibration point pair, to obtain a fused iteration matrix corresponding to the current calibration point pair. When obtaining the fused iteration matrices corresponding to the calibration point pairs, the computer device may superpose the fused iteration matrices corresponding to the calibration point pairs, to obtain the iteration matrix of the current round.

In an embodiment, the computer device may set an initial value of the iteration matrix and traverse calibration point pairs. For the first traversed calibration point pair, the computer device may determine the Jacobian matrix and the residual matrix of the first traversed calibration point pair, and fuse the Jacobian matrix and the residual matrix of the first traversed calibration point pair, to obtain the fused iteration matrix of the first traversed calibration point pair. The computer device superimposes the initial value of the fused iteration matrix and the fused Jacobian matrix to obtain a superimposed iteration matrix of the first traversed calibration point pair. The computer device continues to determine a fused iteration matrix of a next traversed calibration point pair, and superimposes the fused iteration matrix of the next traversed calibration point pair and the superimposed iteration matrix of the first traversed calibration point pair, to obtain a superimposed iteration matrix of the next traversed calibration point pair. Iteration is performed in this way until the last calibration point pair is traversed, and a superimposed iteration matrix of the last traversed calibration point pair is used as the iteration matrix of the current round.

In an embodiment, in the process of calculating the residual matrix corresponding to the i^{th} coordinate pair, assuming that the i^{th} coordinate pair is [(*x_{uí}, yᵤᵢ*)*,* (*x_{di}, y_{di}*)]*,* the computer device determines an undistorted distance *rᵤᵢ* corresponding to the first calibration point coordinates (*xᵤᵢ, yᵤᵢ*)*,* determines a distorted distance *r_{di}* corresponding to the second calibration point coordinates (*x_{di}, y_{di}*)*,* and inputs (*xᵤᵢ, yᵤᵢ*)*, rᵤᵢ,* (*x_{di,} y_{di}*)*,* and *r_{di}* and the predicted value (*c*₁ⱼ, *c*₂ⱼ) of the distortion coefficient of the current round into the residual model $R \left({c}_{1}, {c}_{2}\right) = \left[\begin{matrix}F \left({c}_{1}, {c}_{2}\right) \\ G \left({c}_{1}, {c}_{2}\right)\end{matrix}\right]$ , to obtain the residual matrix $\left[\begin{matrix}{x}_{di} ∗ \left(1+{c}_{1 j}∗{{r}_{di}}^{3}+{c}_{2 j}∗{{r}_{di}}^{5}\right) - {x}_{ui} \\ {y}_{di} ∗ \left(1-{c}_{1 j}∗{{r}_{di}}^{3}+{c}_{2 j}∗{{r}_{di}}^{5}\right) - {y}_{ui}\end{matrix}\right]$ of the i^{th} coordinate pair [(*xᵤᵢ, yᵤᵢ*)*,* (*x_{dí}, y_{di}*)] of calibration points. The residual matrix corresponding to the i^{th} coordinate pair is also the residual matrix corresponding to the i^{th} calibration point pair.

In the above embodiment, by determining the fused iteration matrices of all the calibration point pairs, the iteration matrix of the current round can be quickly obtained based on the fused iteration matrices of all the calibration point pairs.

In an embodiment, the Hessian matrix model is generated based on the Jacobian matrix model, and the Jacobian matrix model represents a partial derivative of the residual model in a direction of the distortion coefficient; the iteration matrix is generated based on the Jacobian matrix model and the residual model; and the residual model represents residual between the change between the coordinate before distortion and the coordinate after distortion determined based on the predicted value of the distortion coefficient and the change between the coordinate before distortion and the coordinate after distortion determined based on the actual value of the distortion coefficient.

Specifically, in the process of numerical fitting, the purpose of numerical fitting is that residual between the predicted value of the distortion coefficient obtained through fitting and the actual value of the distortion coefficient is as close to 0 as possible. Based on this purpose, the residual model representing a difference between the change between the coordinate before distortion and the coordinate after distortion determined based on the predicted value of the distortion coefficient and the change between the coordinate before distortion and the coordinate after distortion determined based on the actual value of the distortion coefficient may be generated. In the process of numerical fitting, when the residual outputted by the residual matrix is close to zero, it may be considered that the predicted value of the distortion coefficient obtained through fitting at this time is approximate to the actual value of the distortion coefficient, and the fitting purpose is achieved. Therefore, the purpose of numerical fitting in this application is equivalent to achieving a minimum value of least squares optimization for the residual. In the process of solving the minimum value of least squares optimization for the residual, the predicted value increment of the distortion coefficient in each iteration needs to be determined based on the Hessian matrix and the Jacobian matrix generated based on the residual model, so that final convergence determining of the predicted value increment of the distortion coefficient is completed based on the predicted value increment of the distortion coefficient. When it is determined that the predicted value increment of the distortion coefficient converges, it is determined that the residual outputted by the residual matrix is close to zero. In this case, the predicted value of the distortion coefficient obtained through iteration is the target value.

In an embodiment, the method further includes: obtaining the target calibration point mapping relationship based on both the value of the distortion coefficient and the initial calibration point mapping relationship; obtaining a to-be-displayed image, and performing anti-distortion processing on pixels in the to-be-displayed image according to the target calibration point mapping relationship, to determine distortion correction positions respectively corresponding to the pixels; respectively moving the pixels in the to-be-displayed image to corresponding distortion correction positions, to obtain an anti-distortion image; and triggering the extended reality device to display the anti-distortion image.

Specifically, when the distortion coefficient of the extended reality model is calibrated, that is, when the target calibration point mapping relationship determined based on the distortion coefficient value is obtained, the computer device may obtain the to-be-displayed image, and perform anti-distortion processing on the to-be-displayed image according to the target calibration point mapping relationship to obtain an anti-distortion image. The computer device inputs the anti-distortion image into the extended reality device and triggers the extended reality device to display the anti-distortion image, so that human eyes can view a normal undistorted image through the extended reality device. The computer device may also trigger the extended reality device to perform anti-distortion processing on the to-be-displayed image according to the calibrated target calibration point mapping relationship to obtain an anti-distortion image.

In an embodiment, the target calibration point mapping relationship is specifically a function. For corresponding pixel coordinates of each pixel in the to-be-displayed image, the computer device substitutes the pixel coordinates of the current pixel into an inverse function of the target calibration point mapping relationship to obtain a distortion correction position of the current pixel outputted by the inverse function. The computer device combines corresponding distortion correction positions of pixels to obtain an anti-distortion image.

In an embodiment, referring to FIG. 7, when the display of the extended reality device displays an anti-distortion image, light emitted when the display displays the anti-distortion image passes through the optical module of the extended reality device, and appears as a normally displayed undistorted image from human eyes. FIG. 7 is a schematic diagram in which an extended reality device displays an image according to an embodiment.

In the above embodiment, by calibrating the distortion coefficient, the target distortion relationship may be determined based on the calibrated distortion coefficient, and a normally displayed undistorted image may be outputted based on the target distortion relationship. This greatly improves user experience.

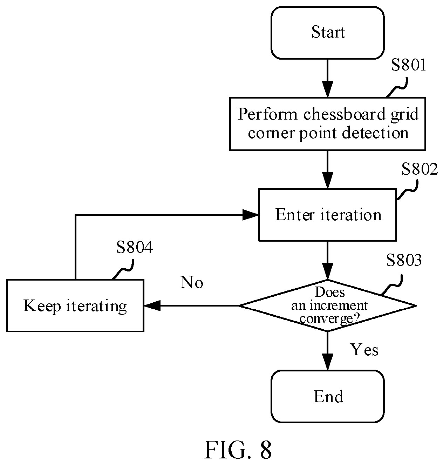

In an embodiment, refer to FIG. 8. S801: A computer device performs corner point detection on chessboard grid images acquired before and after distortion, to obtain multiple calibration point pairs. S802: The computer device obtains a distortion coefficient value increment model and enters iteration, and obtains a predicted value increment of a distortion coefficient based on the distortion coefficient value increment model and the multiple calibration point pairs. S803: The computer device determines whether the predicted value increment of the distortion coefficient converges. If yes, the iteration is ended. S804: If not, continue the iteration until the predicted value increment of the distortion coefficient converges, and use a predicted value of the distortion coefficient at the time of convergence as a target value of the distortion coefficient. FIG. 8 is a schematic diagram of an overall flow of distortion coefficient calibration according to an embodiment.

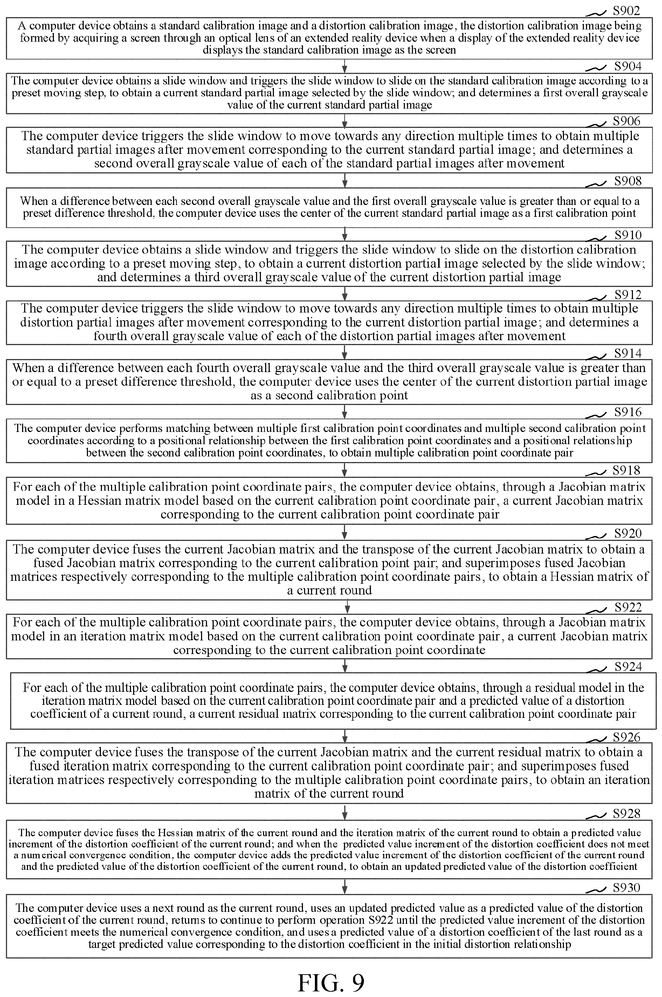

In a specific embodiment, referring to FIG. 9, the method of determining a mapping relationship for an extended reality device includes:
S902: A computer device obtains a reference image and a distortion image; the distortion image being formed by acquiring a screen through an optical module of an extended reality device when a display of the extended reality device displays the reference image as the screen.
S904: The computer device obtains a slide window and triggers the slide window to slide on the reference image according to a preset moving step size, to obtain a current standard partial image selected by the slide window; and determines a first overall grayscale value of the current standard partial image.
S906: The computer device triggers the slide window to move towards any direction multiple times to obtain multiple standard partial images after movement corresponding to the current standard partial image; and determines a second overall grayscale value of each of the standard partial images after movement.
S908: When a difference between each second overall grayscale value and the first overall grayscale value is greater than or equal to a preset difference threshold, the computer device uses the center of the current standard partial image as a first calibration point.
S910: The computer device obtains a slide window and triggers the slide window to slide on the distortion image according to a preset moving step size, to obtain a current distortion partial image selected by the slide window; and determines a third overall grayscale value of the current distortion partial image.
S912: The computer device triggers the slide window to move towards any direction multiple times to obtain multiple distortion partial images after movement corresponding to the current distortion partial image; and determines a fourth overall grayscale value of each of the distortion partial images after movement.
S914: When a difference between each fourth overall grayscale value and the third overall grayscale value is greater than or equal to a preset difference threshold, the computer device uses the center of the current distortion partial image as a second calibration point.
S916: The computer device performs matching between multiple first calibration point coordinates and multiple second calibration point coordinates according to a positional relationship between the first calibration point coordinates and a positional relationship between the second calibration point coordinates, to obtain multiple calibration point pairs.
S918: For each of the multiple calibration point pairs, the computer device obtains, through a Jacobian matrix model in a Hessian matrix model based on the current calibration point pair, a current Jacobian matrix corresponding to the current calibration point pair.
S920: The computer device fuses the current Jacobian matrix and the transpose of the current Jacobian matrix to obtain a fused Jacobian matrix corresponding to the current calibration point pair; and superimposes fused Jacobian matrices respectively corresponding to the multiple calibration point pairs, to obtain a Hessian matrix of a current round.
S922: For each of the multiple calibration point pairs, the computer device obtains, through a Jacobian matrix model in an iteration matrix model based on the current calibration point pair, a current Jacobian matrix corresponding to the current calibration point pair.
S924: For each of the multiple calibration point pairs, the computer device obtains, through a residual model in the iteration matrix model based on the current calibration point pair and a predicted value of a distortion coefficient of a current round, a current residual matrix corresponding to the current calibration point pair.
S926: The computer device fuses the transpose of the current Jacobian matrix and the current residual matrix to obtain a fused iteration matrix corresponding to the current calibration point pair; and superimposes fused iteration matrices respectively corresponding to the multiple calibration point pairs, to obtain an iteration matrix of the current round.
S928: The computer device fuses the Hessian matrix of the current round and the iteration matrix of the current round to obtain a predicted value increment of the distortion coefficient of the current round; and when the predicted value increment of the distortion coefficient does not meet a numerical convergence condition, the computer device adds the predicted value increment of the distortion coefficient of the current round and the predicted value of the distortion coefficient of the current round, to obtain an updated predicted value of the distortion coefficient.
S930: The computer device uses a next round as the current round, uses an updated predicted value as a predicted value of the distortion coefficient of the current round, returns to continue to perform operation S922 until the predicted value increment of the distortion coefficient meets the numerical convergence condition, and uses a predicted value of a distortion coefficient of the last round as a target predicted value corresponding to the distortion coefficient in the initial distortion relationship.

Although the operations are displayed sequentially according to the instructions of the arrows in the flowcharts of the embodiments, these operations are not necessarily performed sequentially according to the sequence instructed by the arrows. Unless otherwise explicitly specified in this application, execution of the operations is not strictly limited, and the operations may be performed in other sequences. Moreover, at least some of the operations in flowcharts in each embodiment may include multiple sub-operations or multiple stages. The operations or stages are not necessarily performed at the same moment but may be performed at different moments. Execution of the operations or stages is not necessarily sequentially performed, but may be performed alternately with other operations or at least some operations or stages of other operations.

This application further provides an application scenario that applies the above method of determining a mapping relationship for an extended reality device. Specifically, the application of the method of determining a mapping relationship for an extended reality device in this application scenario is as follows:

When a distortion coefficient of an XR device needs to be calibrated, a initial calibration point mapping relationship first needs to be obtained. A classic Brown model is used as an example. This model represents a distorted distance *r_{d}* based on a coefficient *cₙ* of an undistorted distance *rᵤ,* which is specifically as follows: $\left\{\begin{matrix}{r}_{d} = f \left({r}_{u}\right) = {r}_{u} + {c}_{1} {r}_{u}^{3} + {c}_{2} {r}_{u}^{5} \\ {r}^{2} = {x}^{2} + {y}^{2}\end{matrix}\right.$

It can be seen that there are two unknown coefficients *c*₁ and *c*₂ above, and the purpose of calibration in this system is to obtain specific values of the two coefficients through fitting. Specifically, during calibration, the system first inputs a standard chessboard grid image, then directly inputs the image into an optical display, obtains a distorted chessboard grid image (with a white background) through a high-definition camera, and finally obtains chessboard grid corner point coordinate positions (also referred to as multiple calibration point pairs) before and after distortion through corner point detection (including but not limited to opencv corner point detection). At this point, preparation work required for the calibration process has been completed. Then, corresponding chessboard grid corner point coordinates (also referred to as multiple calibration point pairs) before and after distortion are used as an input of numerical fitting, to obtain a coefficient in the target calibration point mapping relationship through fitting to obtain a complete forward distortion relationship. A numerical fitting process is specifically as follows:

During calibration, the purpose of numerical fitting is that residual of a coordinate change caused by fitted distortion coefficient (*c*₁*, c*₂) and actual distortion coefficients ( ${c}_{1}^{′} , {c}_{2}^{′}$) is as close to zero as possible (herein, the Brown model is used as an example). Therefore, a caused residual relationship is as follows: $F \left({c}_{1}, {c}_{2}\right) = {\sum }_{i = 1}^{N} \left[{x}_{di}\left(1+{c}_{1}{r}_{di}^{3}+{c}_{2}{r}_{di}^{5}\right)-{x}_{ui}\right]$ $G \left({c}_{1}, {c}_{2}\right) = {\sum }_{i = 1}^{N} \left[{y}_{di}\left(1+{c}_{1}{r}_{di}^{3}+{c}_{2}{r}_{di}^{5}\right)-{y}_{ui}\right]$

To achieve a minimum value (that is, close to 0) of the least squares optimization for the residual, partial derivatives in the directions *c*₁ and *c*₂ need to be solved to form a Jacobian matrix which is specifically as follows: $J \left({c}_{1}, {c}_{2}\right) = \left[\begin{matrix}\frac{\partial F \left({c}_{1}, {c}_{2}\right)}{\partial {c}_{1}} & \frac{\partial F \left({c}_{1}, {c}_{2}\right)}{\partial {c}_{2}} \\ \frac{\partial G \left({c}_{1}, {c}_{2}\right)}{\partial {c}_{1}} & \frac{\partial G \left({c}_{1}, {c}_{2}\right)}{\partial {c}_{2}}\end{matrix}\right]$

Then, through Taylor expansion, a Gauss-Newton condition, and the first-order derivative being zero, changes in two coordinate dimensions in each iteration are obtained as follows: $\left[\begin{matrix}Δ {c}_{1} \\ Δ {c}_{2}\end{matrix}\right] = {\left(J{\left({c}_{1}, {c}_{2}\right)}^{T}J\left({c}_{1}, {c}_{2}\right)\right)}^{- 1} \left(-J{\left({c}_{1}, {c}_{2}\right)}^{T}r\left({c}_{1}, {c}_{2}\right)\right)$
a relationship *r*(*c*₁*, c₂*) is as follows: $r \left({c}_{1}, {c}_{2}\right) = \left[\begin{matrix}F \left({c}_{1}, {c}_{2}\right) \\ G \left({c}_{1}, {c}_{2}\right)\end{matrix}\right]$

At this point, increments Δ*c*₁ and Δ*c*₂ in dimensions *c*₁ and *c*₂ in each iteration may be obtained, then Δc₁ and Δ*c*₂ are calculated through continuous iteration, and it is determined whether values thereof converge to a very small range (which is set to 1*e*⁻⁸ in this system). If yes, coefficients relative to all chessboard grid corner points before and after distortion may be obtained. That is, the calibration function is completed. The obtained distortion coefficients may be directly used in subsequent distortion correction processing. Only after a distortion image is accurately corrected, related subsequent processing (including but not limited to, image display and image quality enhancement) may be smooth. For specific meaning of each parameter in the above formula, refer to the above embodiment.

This application further provides another application scenario that applies the above method of determining a mapping relationship for an extended reality device. Specifically, the application of the method of determining a mapping relationship for an extended reality device in this application scenario is as follows:

A user may enter a virtual reality world through an extended reality device. For example, a user may play games for entertainment through an extended reality device (an XR device) to enter an interactive virtual reality game scene. Before the user plays games for entertainment through the XR device, a distortion coefficient may be calibrated in advance through the method of determining a mapping relationship proposed in this application, so that the XR device may adjust and display the to-be-displayed virtual reality game scene according to the calibrated distortion coefficient. In this way, the virtual reality game scene viewed by the user is an undistorted scene. By displaying the undistorted virtual reality game scene, the user can experience an immersive game.

The above application scenarios are only exemplary illustrations. The application of the method of determining a mapping relationship for an extended reality device provided by the embodiments of this application is not limited to the above scenarios. For example, before a user performs entertainment and navigation through an extended reality device, a distortion coefficient may also be calibrated in advance through the method of determining a mapping relationship. For example, before a user watches a VR movie (also referred to as a virtual reality movie) through an extended reality device, a distortion coefficient may be calibrated in advance, so that the extended reality device may display undistorted movie images to the user based on the calibrated distortion coefficient. For example, before a user performs navigation through an extended reality device, a distortion coefficient may also be calibrated in advance, so that the extended reality device may display undistorted road images with virtual scenes and real scenes to the user based on the calibrated distortion coefficient.

Based on the same inventive concept, embodiments of this application further provide an apparatus of determining a mapping relationship for an extended reality device that is configured to implement the method of determining a mapping relationship for an extended reality device. The implementation solution to the problem provided by the apparatus is similar to the implementation solution described in the above method. Therefore, for specific definitions in one or more embodiments of the apparatus of determining a mapping relationship for an extended reality device provided below, refer to the above definitions in the method of determining a mapping relationship for an extended reality device. Details are not repeated herein.

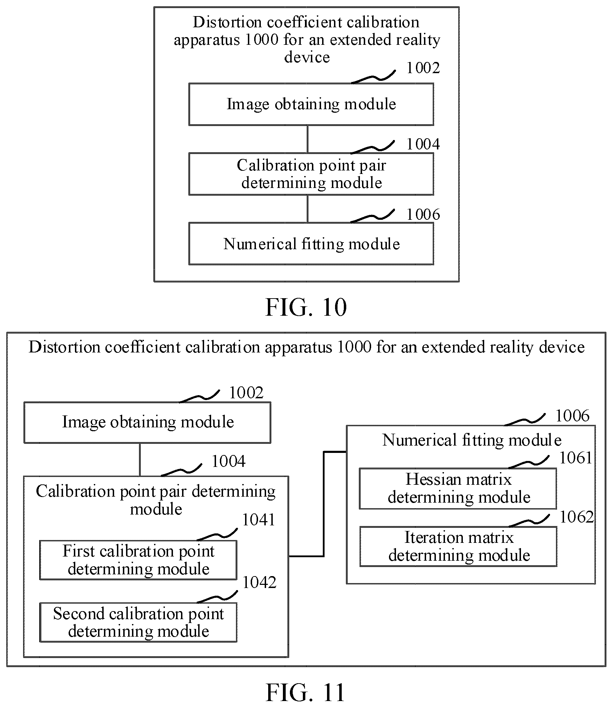

In an embodiment, as shown in FIG. 10, an apparatus of determining a mapping relationship for an extended reality device is provided, including: an image obtaining module 1002, a calibration point pair determining module 1004, and a numerical fitting module 1006.

The image obtaining module 1002 is configured to obtain a reference image and a distortion image, the distortion image being formed by acquiring a screen through an optical module of an extended reality device when a display of the extended reality device displays the reference image as the screen.

The calibration point pair determining module 1004 is configured to perform calibration point detection based on the reference image and the distortion image to obtain multiple calibration point pairs, each of the calibration point pairs including a first calibration point belonging to the reference image and a second calibration point belonging to the distortion image, and the second calibration point being a corresponding calibration point obtained by acquiring the first calibration point through the optical module of the extended reality device.

The numerical fitting module 1006 is configured to obtain a initial calibration point mapping relationship, and perform numerical fitting on the initial calibration point mapping relationship according to the multiple calibration point pairs, to determine a value of the distortion coefficient in the initial calibration point mapping relationship to obtain a target calibration point mapping relationship, the target calibration point mapping relationship being configured for representing a conversion relationship between calibration points in the reference image and the distortion image.

In an embodiment, the distortion image is acquired by an image acquisition device; and in a process in which the image acquisition device acquires the distortion image, the optical module of the extended reality device is located between the image acquisition device and the display of the extended reality device, and the optical center of the optical module is aligned with the center of the display.

In an embodiment, referring to FIG. 11, the calibration point pair determining module 1004 is further configured to perform calibration point detection on the reference image to obtain multiple first calibration points, and determine coordinates of each of the first calibration points in the reference image, to obtain first calibration point coordinates respectively corresponding to the multiple first calibration points; perform calibration point detection on the distortion image to obtain multiple second calibration points, and determine coordinates of each of the second calibration points in the distortion image, to obtain second calibration point coordinates respectively corresponding to the multiple second calibration points; determine a positional relationship between the first calibration points according to the first calibration point coordinates respectively corresponding to the multiple first calibration points; determine a positional relationship between the second calibration points according to the second calibration point coordinates respectively corresponding to the multiple second calibration points; and perform matching between the multiple first calibration points and the multiple second calibration points according to the positional relationship between the first calibration points and the positional relationship between the second calibration points, to obtain the multiple calibration point pairs.

In an embodiment, the calibration point pair determining module 1004 further includes a first calibration point determining module 1041, configured to obtain a slide window and trigger the slide window to slide on the reference image according to a preset moving step size, to obtain a standard partial image selected by the slide window; determine a first overall grayscale value of the standard partial image based on grayscale values of pixels in the standard partial image; trigger the slide window to move towards any direction multiple times to obtain multiple standard partial images after movement corresponding to the standard partial image; determine a second overall grayscale value of each of the standard partial images after movement based on grayscale values of pixels in the standard partial image after movement; and extract the first calibration point from the standard partial image according to a difference between each second overall grayscale value and the first overall grayscale value.

In an embodiment, the first calibration point determining module 1041 is further configured to perform subtraction on each second overall grayscale value and the first overall grayscale value to obtain a grayscale difference corresponding to each second overall grayscale value; obtain a preset difference threshold, and select absolute values greater than or equal to the preset difference threshold from absolute values of grayscale differences; determine a number of the selected absolute values; and obtain a preset number threshold, and when the number is greater than or equal to the preset number threshold, use the center of the standard partial image as the first calibration point.

In an embodiment, the calibration point pair determining module 1004 further includes a second calibration point determining module 1042, configured to obtain a slide window and trigger the slide window to slide on the distortion image according to a preset moving step size, to obtain a distortion partial image selected by the slide window; determine a third overall grayscale value of the distortion partial image based on grayscale values of pixels in the distortion partial image; trigger the slide window to move towards any direction multiple times to obtain multiple distortion partial images after movement corresponding to the distortion partial image; determine a fourth overall grayscale value of each of the distortion partial images after movement based on grayscale values of pixels in the distortion partial image after movement; and extract the second calibration point from the distortion partial image according to a difference between each fourth overall grayscale value and the third overall grayscale value.

In an embodiment, the numerical fitting module 1006 is further configured to obtain a preset distortion coefficient value increment model; where the distortion coefficient value increment model is a model for determining a change amount of a predicted value of the distortion coefficient in two consecutive iterations; determine a predicted value of the distortion coefficient of a current round; obtain a predicted value increment of the distortion coefficient of the current round through the distortion coefficient value increment model according to the multiple calibration point pairs and the predicted value of the distortion coefficient of the current round; obtain a numerical convergence condition, and when the predicted value increment of the distortion coefficient does not meet the numerical convergence condition, add the predicted value increment of the distortion coefficient of the current round and the predicted value of the distortion coefficient of the current round, to obtain an updated predicted value of the distortion coefficient; use a next round as the current round, use the updated predicted value as a predicted value of the distortion coefficient of the current round, and return to continue to perform the operation of obtaining a predicted value increment of the distortion coefficient of the current round through the distortion coefficient value increment model according to the multiple calibration point pairs and the predicted value of the distortion coefficient of the current round, until the predicted value increment of the distortion coefficient meets the numerical convergence condition; and use a predicted value of the distortion coefficient of the last round as the value corresponding to the distortion coefficient in the initial calibration point mapping relationship.

In an embodiment, the distortion coefficient value increment model is determined based on a residual model; the residual model is determined based on the initial calibration point mapping relationship; the residual model represents residual between a first coordinate change and a second coordinate change; the first coordinate change is a change between a coordinate before distortion and a coordinate after distortion determined based on the predicted value of the distortion coefficient; and the second coordinate change is a change between a coordinate before distortion and a coordinate after distortion determined based on an actual value of the distortion coefficient.

In an embodiment, the numerical fitting module 1006 is further configured to obtain a Hessian matrix of the current round through a Hessian matrix model in the distortion coefficient value increment model according to the multiple calibration point pairs; obtain an iteration matrix of the current round through an iteration matrix model in the distortion coefficient value increment model according to the multiple calibration point pairs and the predicted value of the distortion coefficient of the current round; and fuse the Hessian matrix of the current round and the iteration matrix of the current round to obtain the predicted value increment of the distortion coefficient of the current round.

In an embodiment, the numerical fitting module 1006 further includes a Hessian matrix determining module 1061, configured to: for each of the multiple calibration point pairs, determine coordinates of the first calibration point belonging to the reference image in the target calibration point pair, and determine coordinates of the second calibration point belonging to the distortion image in the target calibration point pair; according to the coordinates of the first calibration point belonging to the reference image and the coordinates of the second calibration point belonging to the distortion image in the target calibration point pair, determine a coordinate pair corresponding to the target calibration point pair; obtain, through a Jacobian matrix model in the Hessian matrix model according to the coordinate pair, a Jacobian matrix corresponding to the target calibration point pair; fuse the Jacobian matrix and the transpose of the Jacobian matrix to obtain a fused Jacobian matrix corresponding to the target calibration point pair; and superimpose fused Jacobian matrices respectively corresponding to the multiple calibration point pairs, to obtain the Hessian matrix of the current round.

In an embodiment, the numerical fitting module 1006 further includes an iteration matrix determining module 1062, configured to: according to the target calibration point pair and the predicted value of the distortion coefficient of the current round, obtain, through a residual model in the iteration matrix model, a residual matrix corresponding to the target calibration point pair; fuse the transpose of the Jacobian matrix corresponding to the target calibration point pair and the residual matrix corresponding to the target calibration point pair, to obtain a fused iteration matrix corresponding to the target calibration point pair; and superimpose fused iteration matrices respectively corresponding to the multiple calibration point pairs, to obtain the iteration matrix of the current round.

In an embodiment, the Hessian matrix model is generated based on the Jacobian matrix model, and the Jacobian matrix model represents a partial derivative of the residual model in a direction of the distortion coefficient; the iteration matrix is generated based on the Jacobian matrix model and the residual model; and the residual model represents residual between the change between the coordinate before distortion and the coordinate after distortion determined based on the predicted value of the distortion coefficient and the change between the coordinate before distortion and the coordinate after distortion determined based on the actual value of the distortion coefficient.

In an embodiment, the apparatus 1000 of determining a mapping relationship for an extended reality device further includes an anti-distortion module, configured to obtain the target calibration point mapping relationship based on both the value of the distortion coefficient and the to-be-fitted distortion relationship; obtain a to-be-displayed image, and perform anti-distortion processing on pixels in the to-be-displayed image according to the target calibration point mapping relationship, to determine distortion correction positions respectively corresponding to the pixels in the to-be-displayed image; respectively move the pixels to corresponding distortion correction positions, to obtain an anti-distortion image; and trigger the extended reality device to display the anti-distortion image.

Each module in the apparatus of determining a mapping relationship for an extended reality device may be implemented entirely or partially through software, hardware, or a combination thereof. The above-mentioned modules may be embedded in the processor in the computer device in the form of hardware or independent of the processor in the computer device, and may also be stored in the memory of the computer device in the form of software, so that the processor may invoke and execute the corresponding operations of the above-mentioned modules.

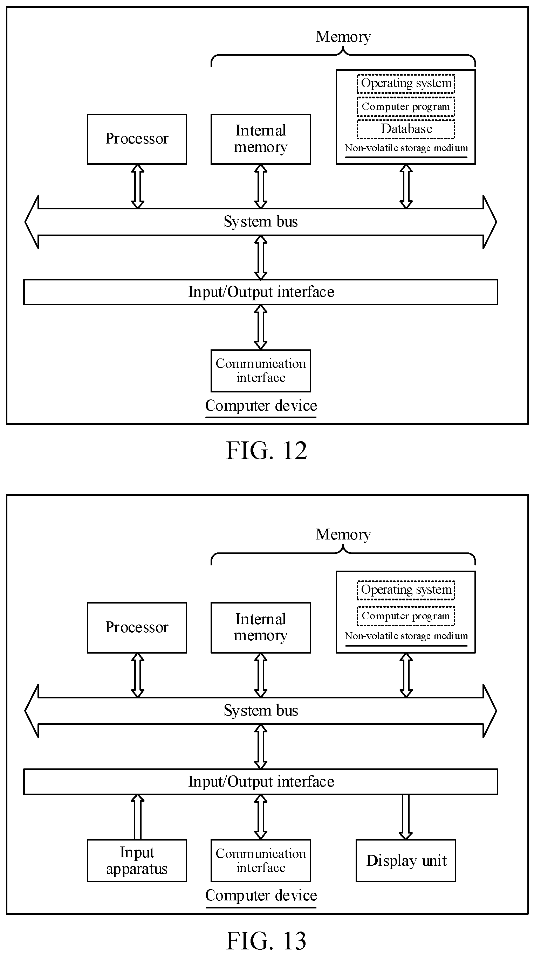

In an embodiment, a computer device is provided and may be a server. An internal structure thereof may be shown in FIG. 12. The computer device includes a processor, a memory, an input/output interface (I/O for short), and a communication interface. The processor, the memory, and the input/output interface are connected through a system bus, and the communication interface is connected to the system bus through the input/output interface. The processor of the computer device is configured to provide computation and control ability. The memory of the computer device includes a non-volatile storage medium and an inner memory. The non-volatile storage medium stores an operating system, computer programs, and databases. The inner memory provides an operating environment for the operating system and the computer programs in the non-volatile storage medium. The database of the computer device is configured to store distortion coefficient calibration data of an extended reality device. The input/output interface of the computer device is configured to exchange information between the processor and external devices. The communication interface of the computer device is configured to communicate with an external terminal by using a network connection. The computer program is executed by the processor to implement a method of determining a mapping relationship for an extended reality device.

In an embodiment, a computer device is provided and may be a terminal. An internal structure thereof may be shown in FIG. 13. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computation and control ability. The memory of the computer device includes a non-volatile storage medium and an inner memory. The non-volatile storage medium stores an operating system and computer programs. The inner memory provides an operating environment for the operating system and the computer programs in the non-volatile storage medium. The input/output interface of the computer device is configured to exchange information between the processor and external devices. The communication interface of the computer device is configured to communicate with external terminals in a wired or wireless mode. The wireless mode may be implemented through WIFI, mobile cellular networks, near field communication (NFC) or other technologies. The computer program is executed by the processor to implement a method of determining a mapping relationship for an extended reality device. The display unit of the computer device is configured to form visual images, and may be a display screen, a projection apparatus, or an extended reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, a mouse or the like.

A person skilled in the art may understand that, the structure shown in FIG. 12 and FIG. 13 is merely a block diagram of a partial structure related to a solution in this application, and does not constitute a limitation to the computer device to which the solution in this application is applied. Specifically, the computer device may include more or fewer components than those shown in the figure, or have some components combined, or have a different component deployment.

In an embodiment, a computer device is further provided, including: a memory and a processor, the memory stores computer programs, and the computer program is executed by the processor to perform the operations of the foregoing method embodiments.

In an embodiment, a computer-readable storage medium is provided, having computer programs stored therein, and the computer program is executed by a processor to perform the operations of the foregoing method embodiments.

In an embodiment, a computer program product or a computer program is provided, including computer instructions stored in a computer-readable storage medium. A processor of a computer device reads the computer instructions from the computer-readable storage medium, and the processor executes the computer instructions, so that the computer device performs the operations of the foregoing method embodiments.

The user information (including but not limited to user equipment information, user personal information, or the like) and data (including but not limited to data used for analysis, stored data, displayed data, or the like) involved in this application are information and data that are authorized by the user or that have been fully authorized by all parties, and the collection, use and processing of relevant data need to comply with relevant laws, regulations and standards of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. References to the memory, the database, or other medium used in the embodiments provided in this application may all include at least one of a non-volatile or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may be a random access memory (RAM) or an external cache. As an illustration and not a limitation, the RAM may be in various forms, such as a static random access memory (SRAM) or a dynamic random access memory (DRAM). The database involved in the various embodiments provided in this application may include at least one of a relational database and a non-relational database. The non-relational database may include a blockchain-based distributed database or the like, but is not limited thereto. The processors involved in the various embodiments provided by this application may be general-purpose processors, central processing units, graphics processors, digital signal processors, programmable logic devices, data processing logic devices based on quantum computing, and are not limited thereto.

## Claims

1. A method of determining a mapping relationship for an extended reality device, performed by a computer device, **characterized in that** the method comprises:
obtaining a reference image and a distortion image, the distortion image being acquired by an optical module of an extended reality device when the reference image is displayed on a display of the extended reality device (S202);
detecting multiple calibration point pairs based on the reference image and the distortion image, the calibration point pairs each comprising a first calibration point belonging to the reference image and a second calibration point belonging to the distortion image (5204); and
performing numerical fitting on an initial calibration point mapping relationship between the reference image and the distortion image according to the multiple calibration point pairs to obtain a target calibration point mapping relationship between the reference image and the distortion image (S206, S208);
**characterized in that** :
performing numerical fitting on an initial calibration point mapping relationship between the reference image and the distortion image according to the multiple calibration point pairs to obtain a target calibration point mapping relationship between the reference image and the distortion image comprises:
obtaining a preset distortion coefficient value increment model; wherein the distortion coefficient value increment model is a model for determining a change amount of a predicted value of the distortion coefficient in two consecutive iterations;
obtaining a predicted value of the distortion coefficient of a current round;
obtaining a predicted value increment of the distortion coefficient of the current round through the distortion coefficient value increment model according to the multiple calibration point pairs and the predicted value of the distortion coefficient of the current round;
obtaining a numerical convergence condition, and when the predicted value increment of the distortion coefficient does not meet the numerical convergence condition, adding the predicted value increment of the distortion coefficient of the current round and the predicted value of the distortion coefficient of the current round, to obtain an updated predicted value of the distortion coefficient;
using a next round as the current round, using the updated predicted value as a predicted value of the distortion coefficient of the current round, and returning to continue to perform the operation of obtaining a predicted value increment of the distortion coefficient of the current round through the distortion coefficient value increment model according to the multiple calibration point pairs and the predicted value of the distortion coefficient of the current round, until the predicted value increment of the distortion coefficient meets the numerical convergence condition; and
using a predicted value of the distortion coefficient of the last round as the value of the distortion coefficient in the initial calibration point mapping relationship.

2. The method according to claim 1, wherein the distortion image is acquired by an image acquisition device; and
in a process in which the image acquisition device acquires the distortion image, the optical module of the extended reality device is located between the image acquisition device and the display of the extended reality device, and an optical center of the optical module is aligned with a center of the display.

3. The method according to claim 1 or 2, wherein the detecting multiple calibration point pairs based on the reference image and the distortion image comprises:
performing calibration point detection on the reference image to obtain multiple first calibration points, and determining coordinates of each of the first calibration points in the reference image, to obtain first calibration point coordinates respectively corresponding to the multiple first calibration points;
performing calibration point detection on the distortion image to obtain multiple second calibration points, and determining coordinates of each of the second calibration points in the distortion image, to obtain second calibration point coordinates respectively corresponding to the multiple second calibration points;
determining a positional relationship between the first calibration points according to the first calibration point coordinates respectively corresponding to the multiple first calibration points;
determining a positional relationship between the second calibration points according to the second calibration point coordinates respectively corresponding to the multiple second calibration points; and
performing matching between the multiple first calibration points and the multiple second calibration points according to the positional relationship between the first calibration points and the positional relationship between the second calibration points, to obtain the multiple calibration point pairs.

4. The method according to claim 3, wherein the performing calibration point detection on the reference image to obtain multiple first calibration points comprises:
obtaining a slide window and triggering the slide window to slide on the reference image according to a preset moving step size, to obtain a standard partial image selected by the slide window;
determining a first overall grayscale value of the standard partial image based on grayscale values of pixels in the standard partial image;
triggering the slide window to move towards any direction multiple times to obtain multiple standard partial images after movement corresponding to the standard partial image;
determining a second overall grayscale value of each of the standard partial images after movement based on grayscale values of pixels in the standard partial image after movement; and
extracting the first calibration point from the standard partial image according to a difference between each second overall grayscale value and the first overall grayscale value.

5. The method according to claim 4, wherein the extracting the first calibration point from the standard partial image according to a difference between each second overall grayscale value and the first overall grayscale value comprises:
performing subtraction on each second overall grayscale value and the first overall grayscale value to obtain a grayscale difference corresponding to each second overall grayscale value;
obtaining a preset difference threshold, and selecting absolute values greater than or equal to the preset difference threshold from absolute values of grayscale differences;
determining a number of the selected absolute values; and
obtaining a preset number threshold, and when the number is greater than or equal to the preset number threshold, using the center of the standard partial image as the first calibration point.

6. The method according to claim 4, wherein the performing calibration point detection on the distortion image to obtain multiple second calibration points comprises:
obtaining a slide window and triggering the slide window to slide on the distortion image according to a preset moving step size, to obtain a distortion partial image selected by the slide window;
determining a third overall grayscale value of the distortion partial image based on grayscale values of pixels in the distortion partial image;
triggering the slide window to move towards any direction multiple times to obtain multiple distortion partial images after movement corresponding to the distortion partial image;
determining a fourth overall grayscale value of each of the distortion partial images after movement based on grayscale values of pixels in the distortion partial image after movement; and
extracting the second calibration point from the distortion partial image according to a difference between each fourth overall grayscale value and the third overall grayscale value.

7. The method according to claim 1, wherein the distortion coefficient value increment model is determined based on a residual model; the residual model is determined based on the initial calibration point mapping relationship; the residual model represents residual between a first coordinate change and a second coordinate change; the first coordinate change is a change between a coordinate before distortion and a coordinate after distortion determined based on the predicted value of the distortion coefficient; and the second coordinate change is a change between a coordinate before distortion and a coordinate after distortion determined based on an actual value of the distortion coefficient.

8. The method according to claim 1 or 7, wherein the obtaining a predicted value increment of the distortion coefficient of the current round through the distortion coefficient value increment model according to the multiple calibration point pairs and the predicted value of the distortion coefficient of the current round comprises:
obtaining a Hessian matrix of the current round through a Hessian matrix model in the distortion coefficient value increment model according to the multiple calibration point pairs;
obtaining an iteration matrix of the current round through an iteration matrix model in the distortion coefficient value increment model according to the multiple calibration point pairs and the predicted value of the distortion coefficient of the current round; and
fusing the Hessian matrix of the current round and the iteration matrix of the current round to obtain the predicted value increment of the distortion coefficient of the current round.

9. The method according to claim 8, wherein the obtaining a Hessian matrix of the current round through a Hessian matrix model in the distortion coefficient value increment model according to the multiple calibration point pairs comprises:
for each of the multiple calibration point pairs, determining coordinates of the first calibration point belonging to the reference image in the target calibration point pair, and determining coordinates of the second calibration point belonging to the distortion image in the target calibration point pair;
according to the coordinates of the first calibration point belonging to the reference image and the coordinates of the second calibration point belonging to the distortion image in the target calibration point pair, determining a coordinate pair corresponding to the target calibration point pair;
obtaining, through a Jacobian matrix model in the Hessian matrix model according to the coordinate pair, a Jacobian matrix corresponding to the target calibration point pair;
fusing the Jacobian matrix and the transpose of the Jacobian matrix to obtain a fused Jacobian matrix corresponding to the target calibration point pair; and
superimposing fused Jacobian matrices respectively corresponding to the multiple calibration point pairs, to obtain the Hessian matrix of the current round.

10. The method according to claim 9, wherein the obtaining an iteration matrix of the current round through an iteration matrix model in the distortion coefficient value increment model according to the multiple calibration point pairs and the predicted value of the distortion coefficient of the current round comprises:
according to the target calibration point pair and the predicted value of the distortion coefficient of the current round, obtaining, through a residual model in the iteration matrix model, a residual matrix corresponding to the target calibration point pair;
fusing the transpose of the Jacobian matrix corresponding to the target calibration point pair and the residual matrix corresponding to the target calibration point pair, to obtain a fused iteration matrix corresponding to the target calibration point pair; and
superimposing fused iteration matrices respectively corresponding to the multiple calibration point pairs, to obtain the iteration matrix of the current round.

11. The method according to claim 8 or 10, wherein the Hessian matrix model is generated based on the Jacobian matrix model, and the Jacobian matrix model represents a partial derivative of the residual model in a direction of the distortion coefficient; the iteration matrix is generated based on the Jacobian matrix model and the residual model; and the residual model represents residual between the change between the coordinate before distortion and the coordinate after distortion determined based on the predicted value of the distortion coefficient and the change between the coordinate before distortion and the coordinate after distortion determined based on the actual value of the distortion coefficient.

12. The method according to claim 1, wherein the method further comprises:
obtaining the target calibration point mapping relationship based on both the value of the distortion coefficient and the initial calibration point mapping relationship;
obtaining a to-be-displayed image, and performing anti-distortion processing on pixels in the to-be-displayed image according to the target calibration point mapping relationship, to determine distortion correction positions respectively corresponding to the pixels;
respectively moving the pixels in the to-be-displayed image to corresponding distortion correction positions, to obtain an anti-distortion image; and
triggering the extended reality device to display the anti-distortion image.

13. A computer device, comprising a memory and a processor, the memory having a computer program stored therein, and the processor executing the computer program to perform the operations of the method according to any one of claims 1 to 12.

14. A computer-readable storage medium, having a computer program stored therein, the computer program being executed by a processor to perform the operations of the method according to any one of claims 1 to 12.

## Patentansprüche

1. Ein Verfahren zum Bestimmen einer Abbildungsbeziehung für eine Vorrichtung für erweiterte Realität, das von einer Computervorrichtung durchgeführt wird, **dadurch gekennzeichnet, dass** das Verfahren umfasst:
Erhalten eines Referenzbildes und eines Verzerrungsbildes, wobei das Verzerrungsbild durch ein optisches Modul einer Vorrichtung für erweiterte Realität erfasst wird, wenn das Referenzbild auf einer Anzeige der Vorrichtung für erweiterte Realität angezeigt wird (S202);
Detektieren mehrerer Kalibrierpunktpaare auf Grundlage des Referenzbildes und des Verzerrungsbildes, wobei die Kalibrierpunktpaare jeweils einen ersten Kalibrierpunkt, der zu dem Referenzbild gehört, und einen zweiten Kalibrierpunkt, der zu dem Verzerrungsbild gehört, umfassen (S204); und
Durchführen einer numerischen Anpassung an einer anfänglichen Kalibrierpunkt-Abbildungsbeziehung zwischen dem Referenzbild und dem Verzerrungsbild gemäß den mehreren Kalibrierpunktpaaren, um eine Ziel-Kalibrierpunkt-Abbildungsbeziehung zwischen dem Referenzbild und dem Verzerrungsbild zu erhalten (S206, S208);
**dadurch gekennzeichnet, dass**:
das Durchführen einer numerischen Anpassung an einer anfänglichen Kalibrierpunkt-Abbildungsbeziehung zwischen dem Referenzbild und dem Verzerrungsbild gemäß den mehreren Kalibrierpunktpaaren, um eine Ziel-Kalibrierpunkt-Abbildungsbeziehung zwischen dem Referenzbild und dem Verzerrungsbild zu erhalten, umfasst:
Erhalten eines voreingestellten Modells für ein Wertinkrement des Verzerrungskoeffizienten; wobei das Modell für ein Wertinkrement des Verzerrungskoeffizienten ein Modell zum Bestimmen eines Änderungsbetrags eines vorhergesagten Werts des Verzerrungskoeffizienten in zwei aufeinanderfolgenden Iterationen ist;
Erhalten eines vorhergesagten Werts des Verzerrungskoeffizienten einer aktuellen Runde;
Erhalten eines Inkrements des vorhergesagten Werts des Verzerrungskoeffizienten der aktuellen Runde mittels des Modells für ein Wertinkrement des Verzerrungskoeffizienten gemäß den mehreren Kalibrierpunktpaaren und dem vorhergesagten Wert des Verzerrungskoeffizienten der aktuellen Runde;
Erhalten einer numerischen Konvergenzbedingung und, wenn das Inkrement des vorhergesagten Werts des Verzerrungskoeffizienten die numerische Konvergenzbedingung nicht erfüllt, Addieren des Inkrements des vorhergesagten Werts des Verzerrungskoeffizienten der aktuellen Runde und des vorhergesagten Werts des Verzerrungskoeffizienten der aktuellen Runde, um einen aktualisierten vorhergesagten Wert des Verzerrungskoeffizienten zu erhalten;
Verwenden einer nächsten Runde als die aktuelle Runde, Verwenden des aktualisierten vorhergesagten Werts als einen vorhergesagten Wert des Verzerrungskoeffizienten der aktuellen Runde und Zurückkehren, um mit dem Durchführen des Vorgangs des Erhaltens eines Inkrements des vorhergesagten Werts des Verzerrungskoeffizienten der aktuellen Runde mittels des Modells für ein Wertinkrement des Verzerrungskoeffizienten gemäß den mehreren Kalibrierpunktpaaren und dem vorhergesagten Wert des Verzerrungskoeffizienten der aktuellen Runde fortzufahren, bis das Inkrement des vorhergesagten Werts des Verzerrungskoeffizienten die numerische Konvergenzbedingung erfüllt; und
Verwenden eines vorhergesagten Werts des Verzerrungskoeffizienten der letzten Runde als den Wert des Verzerrungskoeffizienten in der anfänglichen Kalibrierpunkt-Abbildungsbeziehung.

2. Das Verfahren nach Anspruch 1, wobei das Verzerrungsbild durch eine Bilderfassungsvorrichtung erfasst wird; und
in einem Prozess, in dem die Bilderfassungsvorrichtung das Verzerrungsbild erfasst, das optische Modul der Vorrichtung für erweiterte Realität zwischen der Bilderfassungsvorrichtung und der Anzeige der Vorrichtung für erweiterte Realität angeordnet ist und ein optisches Zentrum des optischen Moduls mit einem Zentrum der Anzeige ausgerichtet ist.

3. Das Verfahren nach Anspruch 1 oder 2, wobei das Detektieren mehrerer Kalibrierpunktpaare auf Grundlage des Referenzbildes und des Verzerrungsbildes umfasst:
Durchführen einer Kalibrierpunkterkennung an dem Referenzbild, um mehrere erste Kalibrierpunkte zu erhalten, und Bestimmen von Koordinaten jedes der ersten Kalibrierpunkte in dem Referenzbild, um erste Kalibrierpunktkoordinaten zu erhalten, die jeweils den mehreren ersten Kalibrierpunkten entsprechen;
Durchführen einer Kalibrierpunkterkennung an dem Verzerrungsbild, um mehrere zweite Kalibrierpunkte zu erhalten, und Bestimmen von Koordinaten jedes der zweiten Kalibrierpunkte in dem Verzerrungsbild, um zweite Kalibrierpunktkoordinaten zu erhalten, die jeweils den mehreren zweiten Kalibrierpunkten entsprechen;
Bestimmen einer Positionsbeziehung zwischen den ersten Kalibrierpunkten gemäß den ersten Kalibrierpunktkoordinaten, die jeweils den mehreren ersten Kalibrierpunkten entsprechen;
Bestimmen einer Positionsbeziehung zwischen den zweiten Kalibrierpunkten gemäß den zweiten Kalibrierpunktkoordinaten, die jeweils den mehreren zweiten Kalibrierpunkten entsprechen; und
Durchführen eines Abgleichs zwischen den mehreren ersten Kalibrierpunkten und den mehreren zweiten Kalibrierpunkten gemäß der Positionsbeziehung zwischen den ersten Kalibrierpunkten und der Positionsbeziehung zwischen den zweiten Kalibrierpunkten, um die mehreren Kalibrierpunktpaare zu erhalten.

4. Das Verfahren nach Anspruch 3, wobei das Durchführen einer Kalibrierpunkterkennung an dem Referenzbild, um mehrere erste Kalibrierpunkte zu erhalten, umfasst:
Erhalten eines Gleitfensters und Veranlassen des Gleitfensters, gemäß einer voreingestellten Bewegungsschrittweite über das Referenzbild zu gleiten, um ein durch das Gleitfenster ausgewähltes Standardteilbild zu erhalten;
Bestimmen eines ersten Gesamtgrauwerts des Standardteilbildes auf Grundlage von Grauwerten von Pixeln in dem Standardteilbild;
Veranlassen des Gleitfensters, sich mehrmals in eine beliebige Richtung zu bewegen, um mehrere Standardteilbilder nach der Bewegung zu erhalten, die dem Standardteilbild entsprechen;
Bestimmen eines zweiten Gesamtgrauwerts jedes der Standardteilbilder nach der Bewegung auf Grundlage von Grauwerten von Pixeln in dem Standardteilbild nach der Bewegung; und
Extrahieren des ersten Kalibrierpunkts aus dem Standardteilbild gemäß einer Differenz zwischen jedem der zweiten Gesamtgrauwerte und dem ersten Gesamtgrauwert.

5. Das Verfahren nach Anspruch 4, wobei das Extrahieren des ersten Kalibrierpunkts aus dem Standardteilbild gemäß einer Differenz zwischen jedem der zweiten Gesamtgrauwerte und dem ersten Gesamtgrauwert umfasst:
Durchführen einer Subtraktion zwischen jedem der zweiten Gesamtgrauwerte und dem ersten Gesamtgrauwert, um eine Grauwertdifferenz zu erhalten, die jedem der zweiten Gesamtgrauwerte entspricht;
Erhalten eines voreingestellten Differenzschwellenwerts und Auswählen von Absolutwerten, die größer als oder gleich dem voreingestellten Differenzschwellenwert sind, aus Absolutwerten von Grauwertdifferenzen;
Bestimmen einer Anzahl der ausgewählten Absolutwerte; und
Erhalten eines voreingestellten Anzahlschwellenwerts und, wenn die Anzahl größer als oder gleich dem voreingestellten Anzahlschwellenwert ist, Verwenden des Zentrums des Standardteilbildes als den ersten Kalibrierpunkt.

6. Das Verfahren nach Anspruch 4, wobei das Durchführen einer Kalibrierpunkterkennung an dem Verzerrungsbild, um mehrere zweite Kalibrierpunkte zu erhalten, umfasst:
Erhalten eines Gleitfensters und Veranlassen des Gleitfensters, gemäß einer voreingestellten Bewegungsschrittweite über das Verzerrungsbild zu gleiten, um ein durch das Gleitfenster ausgewähltes Verzerrungsteilbild zu erhalten;
Bestimmen eines dritten Gesamtgrauwerts des Verzerrungsteilbildes auf Grundlage von Grauwerten von Pixeln in dem Verzerrungsteilbild;
Veranlassen des Gleitfensters, sich mehrmals in eine beliebige Richtung zu bewegen, um mehrere Verzerrungsteilbilder nach der Bewegung zu erhalten, die dem Verzerrungsteilbild entsprechen;
Bestimmen eines vierten Gesamtgrauwerts jedes der Verzerrungsteilbilder nach der Bewegung auf Grundlage von Grauwerten von Pixeln in dem Verzerrungsteilbild nach der Bewegung; und
Extrahieren des zweiten Kalibrierpunkts aus dem Verzerrungsteilbild gemäß einer Differenz zwischen jedem der vierten Gesamtgrauwerte und dem dritten Gesamtgrauwert.

7. Das Verfahren nach Anspruch 1, wobei das Modell für ein Wertinkrement des Verzerrungskoeffizienten auf Grundlage eines Residualmodells bestimmt wird; das Residualmodell auf Grundlage der anfänglichen Kalibrierpunkt-Abbildungsbeziehung bestimmt wird; das Residualmodell ein Residuum zwischen einer ersten Koordinatenänderung und einer zweiten Koordinatenänderung repräsentiert; die erste Koordinatenänderung eine Änderung zwischen einer Koordinate vor Verzerrung und einer Koordinate nach Verzerrung ist, die auf Grundlage des vorhergesagten Werts des Verzerrungskoeffizienten bestimmt wird; und die zweite Koordinatenänderung eine Änderung zwischen einer Koordinate vor Verzerrung und einer Koordinate nach Verzerrung ist, die auf Grundlage eines tatsächlichen Werts des Verzerrungskoeffizienten bestimmt wird.

8. Das Verfahren nach Anspruch 1 oder 7, wobei das Erhalten eines Inkrements des vorhergesagten Werts des Verzerrungskoeffizienten der aktuellen Runde mittels des Modells für ein Wertinkrement des Verzerrungskoeffizienten gemäß den mehreren Kalibrierpunktpaaren und dem vorhergesagten Wert des Verzerrungskoeffizienten der aktuellen Runde umfasst:
Erhalten einer Hesse-Matrix der aktuellen Runde mittels eines Hesse-Matrix-Modells in dem Modell für ein Wertinkrement des Verzerrungskoeffizienten gemäß den mehreren Kalibrierpunktpaaren;
Erhalten einer Iterationsmatrix der aktuellen Runde mittels eines Iterationsmatrixmodells in dem Modell für ein Wertinkrement des Verzerrungskoeffizienten gemäß den mehreren Kalibrierpunktpaaren und dem vorhergesagten Wert des Verzerrungskoeffizienten der aktuellen Runde; und
Fusionieren der Hesse-Matrix der aktuellen Runde und der Iterationsmatrix der aktuellen Runde, um das Inkrement des vorhergesagten Werts des Verzerrungskoeffizienten der aktuellen Runde zu erhalten.

9. Das Verfahren nach Anspruch 8, wobei das Erhalten einer Hesse-Matrix der aktuellen Runde mittels eines Hesse-Matrix-Modells in dem Modell für ein Wertinkrement des Verzerrungskoeffizienten gemäß den mehreren Kalibrierpunktpaaren umfasst:
für jedes der mehreren Kalibrierpunktpaare Bestimmen von Koordinaten des ersten Kalibrierpunkts, der zu dem Referenzbild in dem Ziel-Kalibrierpunktpaar gehört, und Bestimmen von Koordinaten des zweiten Kalibrierpunkts, der zu dem Verzerrungsbild in dem Ziel-Kalibrierpunktpaar gehört;
gemäß den Koordinaten des ersten Kalibrierpunkts, der zu dem Referenzbild gehört, und den Koordinaten des zweiten Kalibrierpunkts, der zu dem Verzerrungsbild gehört, in dem Ziel-Kalibrierpunktpaar Bestimmen eines Koordinatenpaars, das dem Ziel-Kalibrierpunktpaar entspricht;
Erhalten, mittels eines Jacobi-Matrix-Modells in dem Hesse-Matrix-Modell gemäß dem Koordinatenpaar, einer Jacobi-Matrix, die dem Ziel-Kalibrierpunktpaar entspricht;
Fusionieren der Jacobi-Matrix und der Transponierten der Jacobi-Matrix, um eine fusionierte Jacobi-Matrix zu erhalten, die dem Ziel-Kalibrierpunktpaar entspricht; und
Überlagern fusionierter Jacobi-Matrizen, die jeweils den mehreren Kalibrierpunktpaaren entsprechen, um die Hesse-Matrix der aktuellen Runde zu erhalten.

10. Das Verfahren nach Anspruch 9, wobei das Erhalten einer Iterationsmatrix der aktuellen Runde mittels eines Iterationsmatrixmodells in dem Modell für ein Wertinkrement des Verzerrungskoeffizienten gemäß den mehreren Kalibrierpunktpaaren und dem vorhergesagten Wert des Verzerrungskoeffizienten der aktuellen Runde umfasst:
gemäß dem Ziel-Kalibrierpunktpaar und dem vorhergesagten Wert des Verzerrungskoeffizienten der aktuellen Runde Erhalten, mittels eines Residualmodells in dem Iterationsmatrixmodell, einer Residualmatrix, die dem Ziel-Kalibrierpunktpaar entspricht;
Fusionieren der Transponierten der Jacobi-Matrix, die dem Ziel-Kalibrierpunktpaar entspricht, und der Residualmatrix, die dem Ziel-Kalibrierpunktpaar entspricht, um eine fusionierte Iterationsmatrix zu erhalten, die dem Ziel-Kalibrierpunktpaar entspricht; und
Überlagern fusionierter Iterationsmatrizen, die jeweils den mehreren Kalibrierpunktpaaren entsprechen, um die Iterationsmatrix der aktuellen Runde zu erhalten.

11. Das Verfahren nach Anspruch 8 oder 10, wobei das Hesse-Matrix-Modell auf Grundlage des Jacobi-Matrix-Modells erzeugt wird und das Jacobi-Matrix-Modell eine partielle Ableitung des Residualmodells in einer Richtung des Verzerrungskoeffizienten repräsentiert; die Iterationsmatrix auf Grundlage des Jacobi-Matrix-Modells und des Residualmodells erzeugt wird; und das Residualmodell ein Residuum zwischen der Änderung zwischen der Koordinate vor Verzerrung und der Koordinate nach Verzerrung, die auf Grundlage des vorhergesagten Werts des Verzerrungskoeffizienten bestimmt wird, und der Änderung zwischen der Koordinate vor Verzerrung und der Koordinate nach Verzerrung, die auf Grundlage des tatsächlichen Werts des Verzerrungskoeffizienten bestimmt wird, repräsentiert.

12. Das Verfahren nach Anspruch 1, wobei das Verfahren ferner umfasst:
Erhalten der Ziel-Kalibrierpunkt-Abbildungsbeziehung auf Grundlage sowohl des Werts des Verzerrungskoeffizienten als auch der anfänglichen Kalibrierpunkt-Abbildungsbeziehung;
Erhalten eines anzuzeigenden Bildes und Durchführen einer Antiverzerrungsverarbeitung an Pixeln in dem anzuzeigenden Bild gemäß der Ziel-Kalibrierpunkt-Abbildungsbeziehung, um Verzerrungskorrekturpositionen zu bestimmen, die jeweils den Pixeln entsprechen;
jeweiliges Verschieben der Pixel in dem anzuzeigenden Bild an entsprechende Verzerrungskorrekturpositionen, um ein Antiverzerrungsbild zu erhalten; und
Veranlassen der Vorrichtung für erweiterte Realität, das Antiverzerrungsbild anzuzeigen.

13. Eine Computervorrichtung, umfassend einen Speicher und einen Prozessor, wobei in dem Speicher ein Computerprogramm gespeichert ist und der Prozessor das Computerprogramm ausführt, um die Vorgänge des Verfahrens nach einem der Ansprüche 1 bis 12 durchzuführen.

14. Ein computerlesbares Speichermedium, in dem ein Computerprogramm gespeichert ist, wobei das Computerprogramm durch einen Prozessor ausgeführt wird, um die Vorgänge des Verfahrens nach einem der Ansprüche 1 bis 12 durchzuführen.

## Revendications

1. Un procédé de détermination d'une relation de mappage pour un dispositif de réalité étendue, exécuté par un dispositif informatique, **caractérisé en ce que** le procédé comprend :
l'obtention d'une image de référence et d'une image de distorsion, l'image de distorsion étant acquise par un module optique d'un dispositif de réalité étendue lorsque l'image de référence est affichée sur un écran du dispositif de réalité étendue (S202) ;
la détection de multiples paires de points d'étalonnage sur la base de l'image de référence et de l'image de distorsion, les paires de points d'étalonnage comprenant chacune un premier point d'étalonnage appartenant à l'image de référence et un second point d'étalonnage appartenant à l'image de distorsion (S204) ; et
la réalisation d'un ajustement numérique sur une relation initiale de mappage de points d'étalonnage entre l'image de référence et l'image de distorsion en fonction des multiples paires de points d'étalonnage afin d'obtenir une relation cible de mappage de points d'étalonnage entre l'image de référence et l'image de distorsion (S206, S208) ;
**caractérisé en ce que** :
la réalisation d'un ajustement numérique sur une relation initiale de mappage de points d'étalonnage entre l'image de référence et l'image de distorsion en fonction des multiples paires de points d'étalonnage afin d'obtenir une relation cible de mappage de points d'étalonnage entre l'image de référence et l'image de distorsion comprend :
l'obtention d'un modèle prédéfini d'incrément de valeur du coefficient de distorsion ; dans lequel le modèle d'incrément de valeur du coefficient de distorsion est un modèle permettant de déterminer une quantité de changement d'une valeur prédite du coefficient de distorsion dans deux itérations consécutives ;
l'obtention d'une valeur prédite du coefficient de distorsion d'une itération courante ;
l'obtention d'un incrément de valeur prédite du coefficient de distorsion de l'itération courante au moyen du modèle d'incrément de valeur du coefficient de distorsion en fonction des multiples paires de points d'étalonnage et de la valeur prédite du coefficient de distorsion de l'itération courante ;
l'obtention d'une condition de convergence numérique et, lorsque l'incrément de valeur prédite du coefficient de distorsion ne satisfait pas à la condition de convergence numérique, l'addition de l'incrément de valeur prédite du coefficient de distorsion de l'itération courante et de la valeur prédite du coefficient de distorsion de l'itération courante, afin d'obtenir une valeur prédite mise à jour du coefficient de distorsion ;
l'utilisation d'une itération suivante comme itération courante, l'utilisation de la valeur prédite mise à jour comme valeur prédite du coefficient de distorsion de l'itération courante, et le retour pour continuer à effectuer l'opération d'obtention d'un incrément de valeur prédite du coefficient de distorsion de l'itération courante au moyen du modèle d'incrément de valeur du coefficient de distorsion en fonction des multiples paires de points d'étalonnage et de la valeur prédite du coefficient de distorsion de l'itération courante, jusqu'à ce que l'incrément de valeur prédite du coefficient de distorsion satisfasse à la condition de convergence numérique ; et
l'utilisation d'une valeur prédite du coefficient de distorsion de la dernière itération comme valeur du coefficient de distorsion dans la relation initiale de mappage de points d'étalonnage.

2. Le procédé selon la revendication 1, dans lequel l'image de distorsion est acquise par un dispositif d'acquisition d'images ; et
dans un processus dans lequel le dispositif d'acquisition d'images acquiert l'image de distorsion, le module optique du dispositif de réalité étendue est situé entre le dispositif d'acquisition d'images et l'écran du dispositif de réalité étendue, et un centre optique du module optique est aligné avec un centre de l'écran.

3. Le procédé selon la revendication 1 ou 2, dans lequel la détection de multiples paires de points d'étalonnage sur la base de l'image de référence et de l'image de distorsion comprend :
la réalisation d'une détection de points d'étalonnage sur l'image de référence afin d'obtenir de multiples premiers points d'étalonnage, et la détermination de coordonnées de chacun des premiers points d'étalonnage dans l'image de référence, afin d'obtenir des coordonnées de premiers points d'étalonnage correspondant respectivement aux multiples premiers points d'étalonnage ;
la réalisation d'une détection de points d'étalonnage sur l'image de distorsion afin d'obtenir de multiples seconds points d'étalonnage, et la détermination de coordonnées de chacun des seconds points d'étalonnage dans l'image de distorsion, afin d'obtenir des coordonnées de seconds points d'étalonnage correspondant respectivement aux multiples seconds points d'étalonnage ;
la détermination d'une relation de position entre les premiers points d'étalonnage en fonction des coordonnées de premiers points d'étalonnage correspondant respectivement aux multiples premiers points d'étalonnage ;
la détermination d'une relation de position entre les seconds points d'étalonnage en fonction des coordonnées de seconds points d'étalonnage correspondant respectivement aux multiples seconds points d'étalonnage ; et
la réalisation d'une mise en correspondance entre les multiples premiers points d'étalonnage et les multiples seconds points d'étalonnage en fonction de la relation de position entre les premiers points d'étalonnage et de la relation de position entre les seconds points d'étalonnage, afin d'obtenir les multiples paires de points d'étalonnage.

4. Le procédé selon la revendication 3, dans lequel la réalisation d'une détection de points d'étalonnage sur l'image de référence afin d'obtenir de multiples premiers points d'étalonnage comprend :
l'obtention d'une fenêtre coulissante et le déclenchement du coulissement de la fenêtre coulissante sur l'image de référence selon un pas de déplacement prédéfini, afin d'obtenir une image partielle standard sélectionnée par la fenêtre coulissante ;
la détermination d'une première valeur globale de niveau de gris de l'image partielle standard sur la base de valeurs de niveau de gris de pixels dans l'image partielle standard ;
le déclenchement du déplacement de la fenêtre coulissante dans une direction quelconque à plusieurs reprises afin d'obtenir de multiples images partielles standard après déplacement correspondant à l'image partielle standard ;
la détermination d'une deuxième valeur globale de niveau de gris de chacune des images partielles standard après déplacement sur la base de valeurs de niveau de gris de pixels dans l'image partielle standard après déplacement ; et
l'extraction du premier point d'étalonnage à partir de l'image partielle standard en fonction d'une différence entre chaque deuxième valeur globale de niveau de gris et la première valeur globale de niveau de gris.

5. Le procédé selon la revendication 4, dans lequel l'extraction du premier point d'étalonnage à partir de l'image partielle standard en fonction d'une différence entre chaque deuxième valeur globale de niveau de gris et la première valeur globale de niveau de gris comprend :
la réalisation d'une soustraction entre chaque deuxième valeur globale de niveau de gris et la première valeur globale de niveau de gris afin d'obtenir une différence de niveau de gris correspondant à chaque deuxième valeur globale de niveau de gris ;
l'obtention d'un seuil de différence prédéfini, et la sélection, parmi des valeurs absolues de différences de niveau de gris, de valeurs absolues supérieures ou égales au seuil de différence prédéfini ;
la détermination d'un nombre des valeurs absolues sélectionnées ; et
l'obtention d'un seuil de nombre prédéfini et, lorsque le nombre est supérieur ou égal au seuil de nombre prédéfini, l'utilisation du centre de l'image partielle standard comme premier point d'étalonnage.

6. Le procédé selon la revendication 4, dans lequel la réalisation d'une détection de points d'étalonnage sur l'image de distorsion afin d'obtenir de multiples seconds points d'étalonnage comprend :
l'obtention d'une fenêtre coulissante et le déclenchement du coulissement de la fenêtre coulissante sur l'image de distorsion selon un pas de déplacement prédéfini, afin d'obtenir une image partielle de distorsion sélectionnée par la fenêtre coulissante ;
la détermination d'une troisième valeur globale de niveau de gris de l'image partielle de distorsion sur la base de valeurs de niveau de gris de pixels dans l'image partielle de distorsion ;
le déclenchement du déplacement de la fenêtre coulissante dans une direction quelconque à plusieurs reprises afin d'obtenir de multiples images partielles de distorsion après déplacement correspondant à l'image partielle de distorsion ;
la détermination d'une quatrième valeur globale de niveau de gris de chacune des images partielles de distorsion après déplacement sur la base de valeurs de niveau de gris de pixels dans l'image partielle de distorsion après déplacement ; et
l'extraction du second point d'étalonnage à partir de l'image partielle de distorsion en fonction d'une différence entre chaque quatrième valeur globale de niveau de gris et la troisième valeur globale de niveau de gris.

7. Le procédé selon la revendication 1, dans lequel le modèle d'incrément de valeur du coefficient de distorsion est déterminé sur la base d'un modèle résiduel ; le modèle résiduel est déterminé sur la base de la relation initiale de mappage de points d'étalonnage ; le modèle résiduel représente un résidu entre un premier changement de coordonnées et un second changement de coordonnées ; le premier changement de coordonnées est un changement entre une coordonnée avant distorsion et une coordonnée après distorsion déterminée sur la base de la valeur prédite du coefficient de distorsion ; et le second changement de coordonnées est un changement entre une coordonnée avant distorsion et une coordonnée après distorsion déterminée sur la base d'une valeur réelle du coefficient de distorsion.

8. Le procédé selon la revendication 1 ou 7, dans lequel l'obtention d'un incrément de valeur prédite du coefficient de distorsion de l'itération courante au moyen du modèle d'incrément de valeur du coefficient de distorsion en fonction des multiples paires de points d'étalonnage et de la valeur prédite du coefficient de distorsion de l'itération courante comprend :
l'obtention d'une matrice hessienne de l'itération courante au moyen d'un modèle de matrice hessienne dans le modèle d'incrément de valeur du coefficient de distorsion en fonction des multiples paires de points d'étalonnage ;
l'obtention d'une matrice d'itération de l'itération courante au moyen d'un modèle de matrice d'itération dans le modèle d'incrément de valeur du coefficient de distorsion en fonction des multiples paires de points d'étalonnage et de la valeur prédite du coefficient de distorsion de l'itération courante ; et
la fusion de la matrice hessienne de l'itération courante et de la matrice d'itération de l'itération courante afin d'obtenir l'incrément de valeur prédite du coefficient de distorsion de l'itération courante.

9. Le procédé selon la revendication 8, dans lequel l'obtention d'une matrice hessienne de l'itération courante au moyen d'un modèle de matrice hessienne dans le modèle d'incrément de valeur du coefficient de distorsion en fonction des multiples paires de points d'étalonnage comprend :
pour chacune des multiples paires de points d'étalonnage, la détermination de coordonnées du premier point d'étalonnage appartenant à l'image de référence dans la paire de points d'étalonnage cible, et la détermination de coordonnées du second point d'étalonnage appartenant à l'image de distorsion dans la paire de points d'étalonnage cible ;
en fonction des coordonnées du premier point d'étalonnage appartenant à l'image de référence et des coordonnées du second point d'étalonnage appartenant à l'image de distorsion dans la paire de points d'étalonnage cible, la détermination d'une paire de coordonnées correspondant à la paire de points d'étalonnage cible ;
l'obtention, au moyen d'un modèle de matrice jacobienne dans le modèle de matrice hessienne en fonction de la paire de coordonnées, d'une matrice jacobienne correspondant à la paire de points d'étalonnage cible ;
la fusion de la matrice jacobienne et de la transposée de la matrice jacobienne afin d'obtenir une matrice jacobienne fusionnée correspondant à la paire de points d'étalonnage cible ; et
la superposition de matrices jacobiennes fusionnées correspondant respectivement aux multiples paires de points d'étalonnage, afin d'obtenir la matrice hessienne de l'itération courante.

10. Le procédé selon la revendication 9, dans lequel l'obtention d'une matrice d'itération de l'itération courante au moyen d'un modèle de matrice d'itération dans le modèle d'incrément de valeur du coefficient de distorsion en fonction des multiples paires de points d'étalonnage et de la valeur prédite du coefficient de distorsion de l'itération courante comprend :
en fonction de la paire de points d'étalonnage cible et de la valeur prédite du coefficient de distorsion de l'itération courante, l'obtention, au moyen d'un modèle résiduel dans le modèle de matrice d'itération, d'une matrice résiduelle correspondant à la paire de points d'étalonnage cible ;
la fusion de la transposée de la matrice jacobienne correspondant à la paire de points d'étalonnage cible et de la matrice résiduelle correspondant à la paire de points d'étalonnage cible, afin d'obtenir une matrice d'itération fusionnée correspondant à la paire de points d'étalonnage cible ; et
la superposition de matrices d'itération fusionnées correspondant respectivement aux multiples paires de points d'étalonnage, afin d'obtenir la matrice d'itération de l'itération courante.

11. Le procédé selon la revendication 8 ou 10, dans lequel le modèle de matrice hessienne est généré sur la base du modèle de matrice jacobienne, et le modèle de matrice jacobienne représente une dérivée partielle du modèle résiduel dans une direction du coefficient de distorsion ; la matrice d'itération est générée sur la base du modèle de matrice jacobienne et du modèle résiduel ; et le modèle résiduel représente un résidu entre le changement entre la coordonnée avant distorsion et la coordonnée après distorsion déterminée sur la base de la valeur prédite du coefficient de distorsion et le changement entre la coordonnée avant distorsion et la coordonnée après distorsion déterminée sur la base de la valeur réelle du coefficient de distorsion.

12. Le procédé selon la revendication 1, dans lequel le procédé comprend en outre :
l'obtention de la relation cible de mappage de points d'étalonnage sur la base à la fois de la valeur du coefficient de distorsion et de la relation initiale de mappage de points d'étalonnage ;
l'obtention d'une image à afficher, et la réalisation d'un traitement anti-distorsion sur des pixels dans l'image à afficher en fonction de la relation cible de mappage de points d'étalonnage, afin de déterminer des positions de correction de distorsion correspondant respectivement aux pixels ;
le déplacement respectif des pixels dans l'image à afficher vers des positions de correction de distorsion correspondantes, afin d'obtenir une image anti-distorsion ; et
le déclenchement du dispositif de réalité étendue pour afficher l'image anti-distorsion.

13. Un dispositif informatique, comprenant une mémoire et un processeur, la mémoire ayant un programme informatique stocké dans celle-ci, et le processeur exécutant le programme informatique pour effectuer les opérations du procédé selon l'une quelconque des revendications 1 à 12.

14. Un support de stockage lisible par ordinateur, ayant un programme informatique stocké dans celui-ci, le programme informatique étant exécuté par un processeur pour effectuer les opérations du procédé selon l'une quelconque des revendications 1 à 12.
